(19) Europäisches Patentamt / European Patent Office / Office européen des brevets

(11) **EP 2 936 756 B1**

(12) **EUROPEAN PATENT SPECIFICATION**

(45) Date of publication and mention
of the grant of the patent:
**04.04.2018 Bulletin 2018/14**

(51) Int Cl.:
**H04L 27/34** *(2006.01)*    **H04L 27/00** *(2006.01)*

(21) Application number: **13868899.9**

(86) International application number:
**PCT/KR2013/012024**

(22) Date of filing: **23.12.2013**

(87) International publication number:
**WO 2014/104684 (03.07.2014 Gazette 2014/27)**

(54) **CONSTELLATION RATIO FOR A HIERARCHICAL MODULATION SIGNAL**

KONSTELLATIONSVERHÄLTNIS FÜR EIN HIERARCHISCHES MODULATIONSSIGNAL

RAPPORT DE CONSTELLATION POUR UN SIGNAL DE MODULATION HIÉRARCHIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2012 GB 201223367**

(43) Date of publication of application:
**28.10.2015 Bulletin 2015/44**

(73) Proprietor: **Samsung Electronics Co., Ltd.**
**Suwon-si, Gyeonggi-do 443-742 (KR)**

(72) Inventors:
- **MOUHOUCHE, Belkacem**
  **Englefield Green**
  **Surrey TW20 0SQ (GB)**
- **MOURAD, Alain**
  **Staines-Upon-Thames**
  **Surrey TW18 3AF (GB)**
- **YUN, Sungryul**
  **Suwon-si**
  **Gyeonggi-do 443-733 (KR)**
- **LEE, Hakju**
  **Seoul 137-907 (KR)**
- **JEONG, Hongsil**
  **Suwon-si**
  **Gyeonggi-do 443-751 (KR)**

(74) Representative: **Nederlandsch Octrooibureau**
**P.O. Box 29720**
**2502 LS The Hague (NL)**

(56) References cited:
**EP-A1- 2 200 242      US-A1- 2009 042 511
US-A1- 2011 096 814    US-A1- 2011 173 517**

- **JUSTIN JAMES: "Adaptive MultireSolution Modulation for Multimedia Traffic over Nakagami Fading Channels", INTERNATIONAL JOURNAL OF WIRELESS & MOBILE NETWORKS, vol. 4, no. 2, 30 April 2012 (2012-04-30), pages 1-20, XP055283408, ISSN: 0975-4679, DOI: 10.5121/ijwmn.2012.4201**
- **M.J. HOSSAIN ET AL: "Adaptive Hierarchical Modulation for Simultaneous Voice and Multiclass Data Transmission Over Fading Channels", IEEE TRANSACTIONS ON VEHICULAR TECHNOLOGY., vol. 55, no. 4, 1 July 2006 (2006-07-01), pages 1181-1194, XP055283462, US ISSN: 0018-9545, DOI: 10.1109/TVT.2005.863345**
- **RADIM STUKAVEC ET AL.: 'Simulation and Measurement of the Transmission Distortions of the Digital Television DVB-T/H Part 2: Hierarchical Modulation Performance' RADIOENGINEERING vol. 19, 03 September 2010, XP055261765 Retrieved from the Internet: <URL:http://www.radioeng.cz/fulltexts/2010/10_03_429_436.pdf>**

EP 2 936 756 B1

## Description

[Technical Field]

The present invention relates to a constellation ratio for use when transmitting two data streams in a Hierarchical Modulation (HM) signal.

[Background Art]

In wireless broadcast systems, the quality of reception of the different receivers spread across a wide coverage area may vary significantly. For example, some applications are intended to be received by both mobile receivers and fixed receivers. Furthermore, it is sometimes desirable to perform Local Service Insertion (LSI) whereby a local content is inserted in some of the cells without affecting the national content being broadcasted. Hierarchical Modulation (HM), which has been adopted in broadcast standards such as Digital Video Broadcast-Terrestrial (DVB-T) and Digital Video Broadcast Next Generation Handheld (DVB-NGH), can be used in such applications to transmit two streams in the same signal. For example, HM can be used to transmit content of different resolutions, such as standard definition (SD), high definition (HD), or ultra-high definition (UHD). The lower resolution content, for instance SD, is transmitted on a high priority (HP) stream while the higher resolution content, for instance HD, is transmitted on a low priority (LP) stream. Depending on receiver conditions, a mobile receiver may only be able to decode the low-resolution content in the HP stream, while a stationary receiver may be able to also decode the LP stream to access the higher-resolution content.

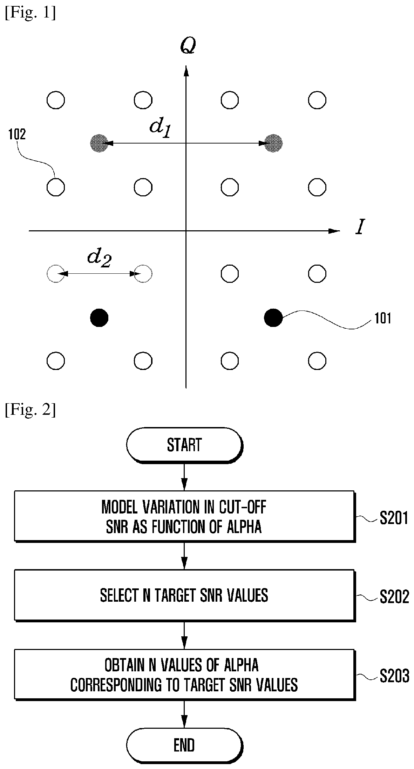

In hierarchical modulation, the LP stream is superposed on top of the HP stream. The HP stream is modulated first, for example using QPSK constellation for local service insertion. The LP stream is modulated on top of the HP stream. That is, when the HP symbol is in a given quadrant, the LP stream constellations are confined to that quadrant. An example of one possible HM constellation is illustrated in Fig. 1, showing constellation points 101 of the HP signal and constellation points 102 of the LP signal. Any HM signal can be characterised by the constellation ratio, $\alpha$, which is the ratio of the distance between constellation points of one stream to the distance between constellation points in the other stream. With reference to Fig. 1, the constellation ratio $\alpha$ is defined as:

$$\alpha = d_1 / d_2$$

wherein $d_1$ is the distance between constellation points in the HP stream, and $d_2$ is the distance between constellation points in the LP stream.

The following prior art document discloses the use of HM constellation, with optimizing of SNR thresholds and constellation ratio based on a model obtained by curve fitting: JUSTIN JAMES, "Adaptive MultireSolution Modulation for Multimedia Traffic over Nakagami Fading Channels", INTERNATIONAL JOURNAL OF WIRELESS & MOBILE NETWORKS, vol. 4, no. 2, 30 April 2012.

[Disclosure of Invention]

[Technical Problem]

In some applications, national content is broadcast by all cells in the HP stream, whilst local content is inserted as the LP stream in one or more cells. Another application uses HM to provide graceful degradation, whereby a coarse version of the content is transmitted on the HP stream and a refined version is transmitted on the LP stream. Receivers with good channel conditions, for example fixed receivers, will be able to decode both streams whereas receivers with bad channel conditions, for example mobile receivers, will be at least able to decode the coarse version of the content.

Typically, a broadcast standard defines a number of values of $\alpha$ from which a service provider can choose a value appropriate for the given application. For example, DVB-T allows a service provider to select the value of $\alpha$ as 1, 2 or 4, whilst DVB-NGH allows a service provider to select the value of $\alpha$ as 1, 2, 3 or 4. The value of $\alpha$ dictates the level of inter-stream interference (ISI), which in turn affects the trade-off between throughput gain and performance degradation. Typically, one set of values of $\alpha$ is provided for each application in use. It is therefore desirable to provide an optimized set of values of $\alpha$.

[Solution to Problem]

The solution to the problem is achieved by the method and apparatus according to the independent claims. The invention is defined and limited by the scope of appended claims 1-13. In the following description, any embodiment(s) referred to and not falling within the scope of the appended claims, is (are) merely example(s) useful to the understanding of the invention. According to the present invention, there is provided a method of obtaining N values of a constellation ratio $\alpha$ for use when transmitting a hierarchical modulation HM signal, the method comprising obtaining a model of the variation in a minimum signal-to-noise ratio(SNR) required to provide a predetermined performance measure at a receiver, as a function of $\alpha$, selecting N target SNR values, and obtaining each of the N values of $\alpha$, based on the model, by obtaining the value of $\alpha$ corresponding to each of the target SNR values.

N can be any positive integer. The minimum SNR can be a SNR required to provide the predetermined performance measure under predetermined receiver conditions. The minimum SNR can be obtained by simulation or by direct measurement. The performance measure can be a parameter relating to received signal quality, for example the bit error rate (BER), packet error rate (PER), or block error rate (BLER).

The constellation ratio refers to the ratio of the separation between constellation points used for a first stream and the separation between constellation points used for a second stream in the HM signal. The first stream can be a high priority (HP) stream, and the second stream can be a low priority (LP) stream.

The target SNR values can be SNR values at regular intervals within a predetermined SNR range. Here, 'regular intervals' refers to uniform intervals which divide the predetermined SNR range into a plurality of sub-ranges of equal width.

The target SNR values can be SNR values within a predetermined SNR range, the predetermined SNR range being divided into one or more sub-ranges, and one or more of the target SNR values can be SNR values selected at regular intervals within at least one of the one or more sub-ranges.

Each of the one or more sub-ranges can be a range defined by two consecutive values of $\alpha$ among a predefined plurality of values of $\alpha$. That is, each sub-range can be defined by two SNR values which correspond to the two consecutive predefined values of $\alpha$.

Obtaining the model can comprise obtaining, for each one of a plurality of first values of $\alpha$, a first minimum SNR value required to give the predetermined value of the parameter relating to received signal quality, and generating a model of the variation in the minimum SNR values with $\alpha$.

Generating the model can comprise obtaining a first SNR value corresponding to the highest value of $\alpha$ among the plurality of first values of $\alpha$, obtaining a second SNR value corresponding to the lowest value of $\alpha$ among the plurality of first values of $\alpha$, selecting a plurality of model SNR values which define predetermined intervals between the first and second SNR values, obtaining a plurality of second values of $\alpha$ by obtaining the values of $\alpha$ corresponding to each of the plurality of model SNR values, and generating the model based on the plurality of second values of $\alpha$ and the plurality of model SNR values.

Generating the model based on the plurality of second values of $\alpha$ and the plurality of model SNR values can comprise fitting a curve to the plurality of second values of $\alpha$ and the plurality of model SNR values.

The model can be a curve of the form:

$$S = [(A - C) / \alpha^B] + C$$

where $\alpha$ is the constellation ratio, S is the minimum SNR value corresponding to a given value of $\alpha$, A is the minimum SNR value corresponding to $\alpha = 1$, B is a predetermined constant, and C is a minimum SNR value corresponding to a predetermined maximum value of $\alpha$.

The method can further comprise obtaining the value of B in dependence on one or more environmental conditions.

The one or more environmental conditions can include channel fading, and/or mobile reception, and/or stationary reception.

B can have a value in the range from 1 to 2.

The obtained N values of $\alpha$ can be for insertion among a plurality of predefined third values of $\alpha$, and the one or more target SNR values can be selected within one or more SNR ranges defined by consecutive ones of the third values of $\alpha$.

The method can further comprise obtaining, for each pair of consecutive third values of $\alpha$, an SNR gap value G based on:

$$G = (S_1 - S_2)$$

where $S_1$ is an SNR value corresponding to one of said pair of consecutive third values of $\alpha$ and $S_2$ is an SNR value corresponding to the other one of said pair of consecutive third values of $\alpha$, determining that a first one of the N values of $\alpha$ is to be inserted between the pair of consecutive third values of $\alpha$ having the largest value of G, and determining where to insert any remaining ones of the N values by obtaining an updated SNR gap value $G_U$ for each pair of consecutive third values of $\alpha$ based on:

$$GU = (S_1 - S_2) / (n_\alpha + 1)$$

where $n_\alpha$ is the number of values of $\alpha$ already inserted between said pair of consecutive third values of $\alpha$, determining that the next one of the N values of $\alpha$ is to be inserted between the pair of consecutive third values of $\alpha$ having the largest value of $G_U$, and repeating until all of the N values of $\alpha$ have been inserted.

The method can further comprise obtaining, for each one of a plurality of combinations of one of the N values of $\alpha$, available modulation schemes and/or coding rates, an estimate of an operating throughput, and selecting the value of $\alpha$, the modulation scheme and/or the coding rate from the combination with the highest estimated throughput, for use when transmitting the HM signal.

The N values of $\alpha$ can be obtained based on:

$$\alpha_k = (k/N)^{\wedge}(-1/B)$$

where k is an integer from 1 to N, $\alpha_k$ is the $k^{th}$ value of $\alpha$, and B is a predetermined constant.

Obtaining the model of the variation in the minimum SNR as a function of $\alpha$ can comprise obtaining the model as a function of $\alpha$, or as a function of $1/\alpha$, or as a function of $\beta$, wherein $\beta = \alpha/(\alpha + 1)$.

According to the present invention, there is also provided a method of obtaining N values of a constellation ratio $\alpha$ for a hierarchical modulation HM signal, the method comprising obtaining the N values of $\alpha$ based on:

$$\alpha_k = (k/N)^{(-1/B)}$$

where k is an integer from 1 to N, $\alpha_k$ is the k$^{th}$ value of $\alpha$, and B is a predetermined constant.

According to the present invention, there is also provided a method of transmitting a hierarchical modulation HM signal, the method comprising selecting a value of a constellation ratio $\alpha$ from N values of obtained using the method of any one of the preceding claims, transmitting the HM signal using the selected value of $\alpha$, and transmitting information for identifying the selected value of $\alpha$.

The N values of $\alpha$ can be obtained based on:

$$\alpha_k = (k/N)^{(-1/B)}$$

where k is an integer from 1 to N, $\alpha_k$ is the k$_k$ value of $\alpha$, and B is a predetermined constant, and the method can further comprise transmitting the values of N and B, and transmitting the value of k as the information for identifying the selected value of $\alpha$.

The method can further comprise transmitting HM signals for a plurality of services in a plurality of physical layer pipes PLPs, a value of $\alpha$ being independently selected for each one of the PLPs, and transmitting, for each of the PLPs, the value of k corresponding to the value of $\alpha$ selected for that PLP.

The method can further comprise independently selecting a value of N and/or B for each one of the PLPs, and transmitting, for each of the PLPs, the selected values of N and/or B for that PLP.

The information for identifying the selected value of $\alpha$ can be an index value corresponding to the selected value of $\alpha$.

The index value can be a binary word index.

The method can further comprise transmitting HM signals for a plurality of services in a plurality of physical layer pipes PLPs, a value of $\alpha$ being independently selected for each one of the PLPs, and transmitting, for each of the PLPs, the index value corresponding to the value of $\alpha$ selected for that PLP.

The index value can be stored in a lookup table with the corresponding value of $\alpha$.

N can be 3 and the obtained values of $\alpha$ can be 1, 1.38, and 2.4, or N can be 4 and the obtained values of $\alpha$ can be 1, 1.26, 1.74, and 2.4, or N can be 6 and the obtained values of $\alpha$ can be 1, 1.16, 1.38, 1.74, 2.4, and 4.19.

The HM signal can be transmitted according to a Digital Video Broadcasting (DVB) standard, an Advanced Television Systems Committee (ATSC) standard, an Integrated Services Digital Broadcasting (ISDB) standard, or a Terrestrial Digital Multimedia Broadcasting (T-DMB) standard.

According to the present invention there is also provided a method of decoding a received hierarchical modulation HM signal, the method comprising obtaining, from the received HM signal, information for identifying a value of constellation ratio $\alpha$ selected from N values of $\alpha$ obtained using the method of any one of claims 1 to 15, identifying the selected value of $\alpha$ based on the obtained information, and decoding the received HM signal based on the identified value of $\alpha$.

The method can further comprise obtaining the values of N and a predetermined constant B from the received HM signal, obtaining the value of an integer k as the information for identifying the selected value of $\alpha$, from the received HM signal, and identifying the value of $\alpha$ based on:

$$\alpha = (k/N)^{(-1/B)}.$$

The method can further comprise receiving HM signals for a plurality of services in a plurality of physical layer pipes PLPs, obtaining, for each one of the plurality of PLPs, a value of k for the PLP from the HM signal received in the PLP, identifying, for each one of the plurality of PLPs, the value of $\alpha$ for the PLP based on the obtained value of k, and decoding, for each one of the plurality of PLPs, the HM signal received in the PLP based on the identified value of $\alpha$.

A different value of k can be obtained for each one of the plurality of PLPs.

The information for identifying the value of $\alpha$ can be an index value, and identifying the value of $\alpha$ based on the obtained index value can comprise searching N stored values of $\alpha$ using the index value obtained from the HM signal, each of the one or more stored values being stored with a corresponding index value, and selecting the stored value of $\alpha$ corresponding to the obtained index value as the identified value of $\alpha$.

The index value can be a binary word index.

The method can further comprise receiving HM signals for a plurality of services in a plurality of physical layer pipes PLPs, and obtaining, for each of the PLPs, the index value corresponding to a value of $\alpha$ for the PLP, from the HM signal received in the PLP.

Searching N stored values of $\alpha$ using the index value can comprise searching in a lookup table storing each one of the N values of $\alpha$ with a corresponding index value.

N can be 3 and the obtained values of $\alpha$ can be 1, 1.38, and 2.4, or N can be 4 and the obtained values of $\alpha$ can be 1, 1.26, 1.74, and 2.4, or N can be 6 and the

obtained values of $\alpha$ can be 1, 1.16, 1.38, 1.74, 2.4, and 4.19.

The HM signal can be received according to a Digital Video Broadcasting DVB standard, an Advanced Television Systems Committee (ATSC) standard, an Integrated Services Digital Broadcasting (ISDB) standard, or a Terrestrial Digital Multimedia Broadcasting (T-DMB) standard.

According to the present invention, there is also provided a computer-readable storage medium arranged to store a computer program, which when executed, performs any of the above-described methods.

According to the present invention, there is also provided apparatus for transmitting a hierarchical modulation HM signal, the apparatus comprising a selection module arranged to select a value of a constellation ratio $\alpha$ from N values of $\alpha$ obtained using the method of any one of claims 1 to 15, and a transmitter module arranged to transmit the HM signal using the selected value of $\alpha$ and to transmit information for identifying the selected value of $\alpha$.

The N values of $\alpha$ can be given by:

$$\alpha_k = (k/N)^{\wedge}(-1/B)$$

where k is an integer from 1 to N, $\alpha_k$ is the k$^{th}$ value of $\alpha$, and B is a predetermined constant, and the transmitter module can be further arranged to transmit the values of N and B, and to transmit the value of k as the information for identifying the selected value of $\alpha$.

The transmitter module can be arranged to transmit HM signals for a plurality of services in a plurality of physical layer pipes PLPs, the selection module being arranged to independently select a value of $\alpha$ for each one of the PLPs, and the transmitter module can be further arranged to transmit, for each of the PLPs, the value of k corresponding to the value of $\alpha$ selected for that PLP.

The selection module can be further arranged to independently select a value of N and/or B for each one of the PLPs, and can be further arranged to transmit, for each of the PLPs, the selected values of N and/or B for that PLP.

The information for identifying the selected value of $\alpha$ can be an index value corresponding to the selected value of $\alpha$.

The index value can be a binary word index.

The transmitter module can be arranged to transmit HM signals for a plurality of services in a plurality of physical layer pipes PLPs, the selection module being arranged to independently select a value of $\alpha$ for each one of the PLPs, and the transmitter module can be further arranged to transmit, for each of the PLPs, the index value corresponding to the value of $\alpha$ selected for that PLP.

The index value can be stored in a lookup table with the corresponding value of $\alpha$.

N can be 3 and the obtained values of $\alpha$ can be 1, 1.38, and 2.4, or N can be 4 and the obtained values of $\alpha$ can be 1, 1.26, 1.74, and 2.4, or N can be 6 and the obtained values of $\alpha$ can be 1, 1.16, 1.38, 1.74, 2.4, and 4.19.

The transmitter module can be arranged to transmit the HM signal according to a Digital Video Broadcasting DVB standard, an Advanced Television Systems Committee (ATSC) standard, an Integrated Services Digital Broadcasting (ISDB) standard, or a Terrestrial Digital Multimedia Broadcasting (T-DMB) standard.

According to the present invention, there is also provided apparatus for decoding a received hierarchical modulation HM signal, the receiver comprising an antenna module for receiving the HM signal, a constellation ratio setting module arranged to obtain information for identifying a value of a constellation ratio $\alpha$ from the received HM signal, the value of $\alpha$ being a value selected from N values of $\alpha$ obtained using the method of any one of claims 1 to 12, and identify the value of $\alpha$ based on the obtained information, and a decoding module arranged to decode the received HM signal based on the identified value of $\alpha$.

The constellation ratio setting module can be further arranged to obtain the values of N and a predetermined constant B from the received HM signal, obtain the value of an integer k as the information for identifying the selected value of $\alpha$, from the received HM signal, and identify the value of $\alpha$ based on:

$$\alpha = (k/N)^{\wedge}(-1/B).$$

The antenna module can be arranged to receive HM signals for a plurality of services in a plurality of physical layer pipes PLPs, wherein the constellation ratio setting module can be arranged to obtain, for each one of the plurality of PLPs, a value of k for the PLP from the HM signal received the PLP, and identify, for each one of the plurality of PLPs, the value of $\alpha$ for the PLP based on the obtained value of k, and the decoding module can be arranged to decode, for each one of the plurality of PLPs, the HM signal received in the PLP based on the identified value of $\alpha$.

The constellation ratio setting module can be further arranged to obtain a different value of k for each one of the plurality of PLPs.

The information for identifying the value of $\alpha$ can be an index value, and the apparatus can further comprise a storage module arranged to store one or more values of $\alpha$ each with a corresponding index value, wherein the constellation ratio setting module can be arranged to identify the value of $\alpha$ based on the obtained index value by searching the N stored values of $\alpha$ using the index value obtained from the HM signal, and selecting the stored value of $\alpha$ corresponding to the obtained index value as the identified value of $\alpha$.

The index value can be a binary word index.

The antenna module can be arranged to receive HM signals for a plurality of services in a plurality of physical layer pipes PLPs, and the constellation ratio setting module can be arranged to obtain, for each of the PLPs, the index value corresponding to a value of $\alpha$ for the PLP, from the HM signal received in the PLP.

The constellation ratio setting module can be arranged to search the N stored values of $\alpha$ using the index value by searching in a lookup table storing each one of the N values of $\alpha$ with a corresponding index value.

N can be 3 and the obtained values of $\alpha$ can be 1, 1.38, and 2.4, or N can be 4 and the obtained values of $\alpha$ can be 1, 1.26, 1.74, and 2.4, or N can be 6 and the obtained values of $\alpha$ can be 1, 1.16, 1.38, 1.74, 2.4, and 4.19.

The antenna module can be arranged to receive the HM signal according to a Digital Video Broadcasting DVB standard, an Advanced Television Systems Committee (ATSC) standard, an Integrated Services Digital Broadcasting (ISDB) standard, or a Terrestrial Digital Multimedia Broadcasting (T-DMB) standard.

[Brief Description of Drawings]

Embodiments of the present invention will now be described, by way of example only, with reference to the accompanying drawings, in which:

Figure 1 illustrates a hierarchical modulation constellation;

Figure 2 illustrates a method of obtaining N values of the constellation ratio $\alpha$, according to an embodiment of the present invention;

Figure 3 is a graph of the variation in BER with the SNR of a received signal at a receiver, according to an embodiment of the present invention;

Figure 4 is a graph of cut-off SNR against the constellation ratio $\alpha$ of an HM signal, according to an embodiment of the present invention;

Figure 5 illustrates obtaining values of the constellation ratio $\alpha$ from the graph of Fig. 4, according to an embodiment of the present invention;

Figure 6 illustrates generating a model by fitting a curve to data points obtained from the graph in Fig. 5, according to an embodiment of the present invention;

Figure 7 illustrates obtaining N values of $\alpha$ from the model of Fig. 6, according to an embodiment of the present invention;

Figure 8 illustrates adapting the model of Fig. 6 to account for an environmental condition, according to an embodiment of the present invention;

Figure 9 illustrates a method of generating a model, according to an embodiment of the present invention;

Figure 10 illustrates obtaining new values of $\alpha$ for addition to a set of pre-existing values, according to an embodiment of the present invention;

Figure 11 illustrates an increase in capacity offered by optimised values of $\alpha$, according to an embodiment of the present invention;

Figure 12 illustrates a method of inserting new values of $\alpha$ into a set of pre-existing values, according to an embodiment of the present invention;

Figure 13 illustrates a method of selecting an optimum combination of transmission parameters, according to an embodiment of the present invention;

Figure 14 illustrates a system for providing content over an HM signal, according to an embodiment of the present invention;

Figure 15 illustrates apparatus for transmitting an HM signal, according to an embodiment of the present invention;

Figure 16 illustrates apparatus for receiving an HM signal, according to an embodiment of the present invention;

Figure 17 illustrates a method of transmitting an HM signal, according to an embodiment of the present invention; and

Figure 18 illustrates a method of decoding a received HM signal, according to an embodiment of the present invention.

[Mode for the Invention]

This application includes some embodiments that are not claimed.

Referring to the hierarchical modulation (HM) constellation illustrated in Fig. 1, the constellation points of the HP signal 101 are illustrated as solid circles, and the constellation points of the LP signal 102 are illustrated as open circles. The separation between the HP constellation points 101 is $d_1$, and the separation between the LP constellation points 102 is $d_2$. As described above, the constellation ratio $\alpha$ is defined as:

$$\alpha = d_1 / d_2$$

The value of $\alpha$ affects the severity of inter-stream interference (ISI), and has a direct effect on the ability of a receiver to decode each stream. A higher value of $\alpha$ will decrease the level of ISI. On the other hand, a lower value of $\alpha$ will increase the data-carrying capacity, referred to as the throughput. There is therefore a trade-off to be made between ISI and throughput when selecting the value of $\alpha$. Specifically, a service provider would like to choose a value of $\alpha$ which provides low enough levels of ISI for the HM signal to be received and decoded by a receiver for which the signal is intended, but which also provides the maximum possible throughput.

Investigations by the inventors have revealed that the sets of values of $\alpha$ currently provided in broadcasting standards, for example 1, 2 and 4 in the case of DVB-T, or 1, 2, 3 and 4 in the case of DVB-NGH, are not optimised in this respect. Embodiments of the invention have therefore been devised which provide optimised values of $\alpha$.

Referring now to Fig. 2, a method of obtaining N values of $\alpha$ is illustrated, according to an embodiment of the present invention. The method can be used to obtain any number N of values of $\alpha$, N being any positive integer. First, in step S201, a model of the variation in a minimum signal-to-noise ratio (SNR) required to provide a predetermined bit error rate (BER) at a receiver, as a function of $\alpha$, is obtained. Although in the present embodiment the BER is considered, in other embodiments any performance measure could be used, for example any parameter relating to received signal quality such as the packet error rate (PER) or block error rate (BLER).

The minimum SNR, which can be referred to as a cut-off SNR, can be obtained for each value of $\alpha$ by simulation or by direct measurement. For consistency, the minimum SNR is preferably obtained for each value of $\alpha$ under the same predetermined receiver conditions. As an example, in the present embodiment a minimum SNR is obtained for each value of $\alpha$ which is the cut-off SNR required to provide a BER below 0.001 after Low-Density Parity-Check (LDPC) decoding, in an Additive White Gaussian Noise (AWGN) environment. However, it will be appreciated that in other embodiments, other predetermined receiver conditions could be used.

The model can be obtained by obtaining a plurality of known values of $\alpha$ and the minimum SNR value corresponding to each of the known values of $\alpha$. The model can then be generated from the known values of $\alpha$ and the obtained minimum SNR values. Preferably, finely-quantised values of $\alpha$ are chosen to improve the accuracy of the model. The model could, for example, be obtained using curve-fitting to obtain an equation relating $\alpha$ to the minimum SNR required to provide the predetermined performance measure. Alternatively, the model could be obtained by interpolating between the known values of $\alpha$ and the corresponding minimum SNR values to obtain a large number of model values of $\alpha$ and minimum SNR values, which could then be stored in a lookup table (LUT). In the latter approach, to obtain a value of $\alpha$ corresponding to a predetermined SNR value, the model could be used to look up the value of $\alpha$ corresponding to the model SNR value closest to the predetermined SNR value, to provide an estimate of the value of $\alpha$ corresponding to the predetermined SNR value. It will be appreciated that these are only a few examples, and other types of model may be obtained in other embodiments.

After obtaining the model, in step S202 N target SNR values are selected. That is, the same number N of target SNR values are selected as the number N of values of $\alpha$ to be obtained. The target SNR values could alternatively be selected before, or at the same as, the model is obtained. Preferably, the target SNR values are selected at regular intervals. In some embodiments, the regular intervals can be intervals within a predetermined range of SNR values, defined by predetermined maximum and minimum SNR values. Here, 'regular intervals' refers to uniform intervals which divide the predetermined SNR range into a plurality of sub-ranges of equal width. As an example, the predetermined maximum SNR value can be the cut-off SNR corresponding to $\alpha = 1$, and the predetermined minimum SNR value can be the cut-off SNR as a maximum value of $\alpha$. The cut-off SNR tends to an asymptotic value as $\alpha$ tends to infinity, corresponding to a mode in which there is no LP stream.

In another embodiment, the N values of $\alpha$ can be added to a pre-existing set of values, for example the values 1, 2 and 4 already defined in an existing DVB-T standard. This provides a combined set of $\alpha$ values including the pre-existing values and the newly-obtained N values. By retaining the pre-existing values in the combined set of $\alpha$ values, backwards compatibility with systems operating according to the older version of the standard can be ensured. When obtaining N values of $\alpha$ to be inserted into a pre-existing set of values, the predetermined SNR range can be a range defined by the pre-existing values of $\alpha$, and furthermore can be divided into sub-ranges. Each sub-range is defined by consecutive ones of the pre-existing values of $\alpha$. One or more of the target SNR values can be selected at regular intervals within one of the sub-ranges, and different regular intervals can be used in different sub-ranges.

Finally, in step S203, the N values of $\alpha$ are obtained, based on the model, by obtaining the value of $\alpha$ corresponding to each of the target SNR values. Because the values of $\alpha$ are obtained based on target SNR values, large gaps in the cut-off SNR between consecutive values of $\alpha$ can be avoided. Therefore for a given number N of $\alpha$ values, if an operator has to switch to a higher value of $\alpha$ in order to provide a service to a receiver with a lower operating SNR, for example, the reduction in capacity can be minimised. The N values of $\alpha$ are optimised if the target SNR values are selected at regular intervals, either in a predetermined SNR range or in a sub-range of the predetermined SNR range. One benefit of providing values of $\alpha$ with corresponding cut-off SNR values at regular intervals is more efficient scheduling, as a scheduler with regular intervals for both HM signals and modulation and coding-rate schemes will be able to select the optimised modulation and coding-rate schemes which yield the highest throughput.

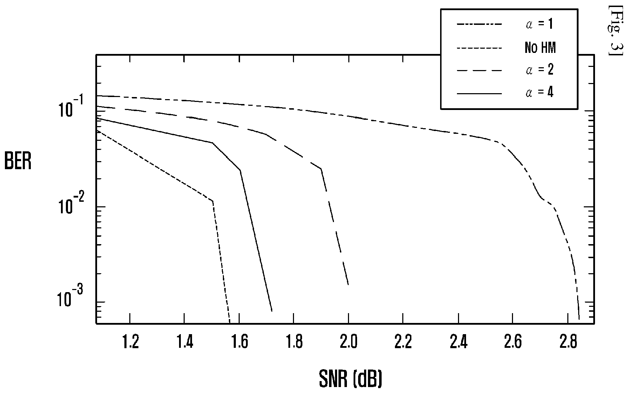

A method of obtaining a model of the variation in the cut-off SNR as a function of $\alpha$ will now be described with reference to Figs. 3 to 7, according to an embodiment of the present invention. It will be appreciated that this method is merely one exemplary method, and other methods of modelling the cut-off SNR as a function of $\alpha$ may be adopted in other embodiments.

Referring now to Fig. 3, a graph of the variation in BER with the SNR of a received signal at a receiver is illustrated. As the SNR at the receiver decreases, the errors in the decoded signal increase, as shown by the increase in BER at low SNR values. Lines are plotted for different values of α (1, 2 and 4, as used in DVB-T), and for the case in which no LP stream is present, that is, when α tends to infinity. For each value of α and for a given BER, a cut-off SNR can be defined as the SNR value which results in the given BER in a decoded signal at the receiver. As shown in Fig. 3, the cut-off SNR decreases as α increases, meaning that the signal is more reliably decoded at higher values of α. However, as described above, increasing the value of α decreases the throughput, that is, the data-carrying capacity of the signal.

Furthermore, as shown in Fig. 3, for the values of α of 1, 2 and 4 defined in the DVB-T standard, there is a large gap in cut-off SNR between the values 1 and 2, and a smaller gap between values 2 and 4. If, for example, if the desired BER is 0.001 and the operating point of a receiver is at SNR 2.75 dB, then the service provider cannot use α = 1 as the cut-off SNR is about 2.85 dB. Therefore the provider has to select the next available value of α, which is α = 2. This gives a cut-off SNR of about 2 dB. The cut-off SNR is therefore 0.75 dB lower than is necessary, meaning that the capacity of the signal has been reduced further than necessary. This problem arises because the cut-off SNRs of the three available α values, namely 1, 2 and 4, are not evenly distributed.

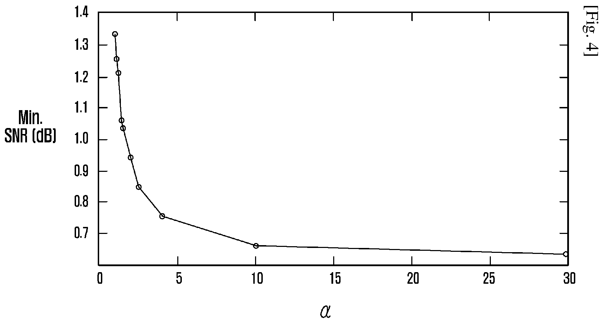

Referring now to Fig. 4, a graph of cut-off SNR against the constellation ratio α of an HM signal is illustrated, according to an embodiment of the present invention. As described above, the cut-off SNR is the minimum SNR required to provide a predetermined performance measure at a receiver, which in the present embodiment is a BER of 0.001. The cut-off SNR values can be obtained for any predetermined values of α using the method described above with respect to Fig. 3, and using data obtained either by simulation or direct measurement.

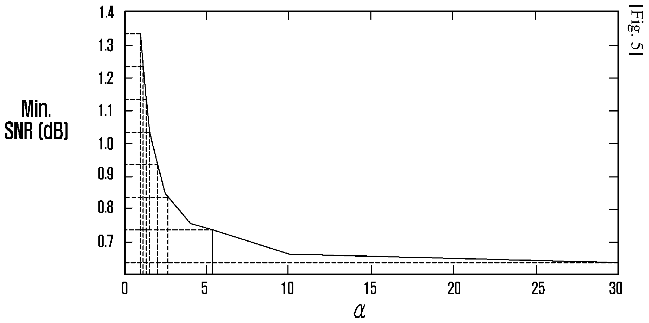

Referring now to Fig. 5, a method of obtaining values of the constellation ratio α from the graph of Fig. 4 is illustrated, according to an embodiment of the present invention. First, an SNR range is defined between a maximum cut-off SNR and a minimum cut-off SNR. In the present embodiment the maximum cut-off SNR is the cut-off SNR corresponding to the highest value of α among the values of α plotted in Fig. 4, and the minimum cut-off SNR is the cut-off SNR corresponding to the lowest value of α among the values of α plotted in Fig. 4. However, in other embodiments different SNR values can be chosen as the maximum and minimum SNR values.

Next, model SNR values are selected by dividing the SNR range into equal portions, so that the model SNR values are spaced at regular intervals in the SNR range. In the present embodiment, the regular intervals are 0.1 dB, but in other embodiments other intervals can be chosen. In some embodiments, the model SNR values can be distributed at irregular intervals in the SNR range.

Then, after selecting the model SNR values, new values of α are obtained by obtaining the values of α corresponding to each of the plurality of model SNR values. The new values of α will hereinafter be referred to as model SNR values, to avoid confusion with the initial values of α originally plotted in Fig. 4.

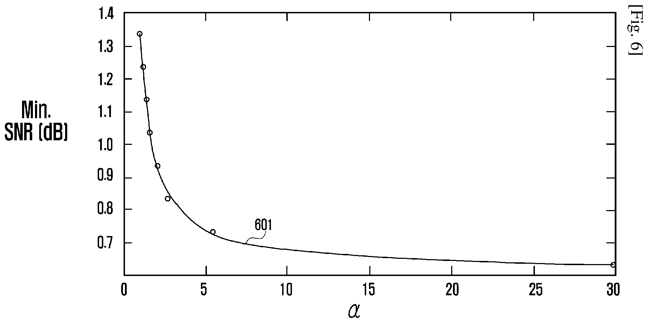

Referring now to Fig. 6, generating a model by fitting a curve to the data points obtained from the graph in Fig. 5 is illustrated, according to an embodiment of the present invention. Specifically, the model is generated based the model values of α and the model SNR values. In the present embodiment the model is generated by fitting a curve 601 to the data points of the model α values and the model SNR values. As shown in Fig. 6, selecting model SNR values at regular intervals has the benefit that the obtained data points are evenly spaced throughout the SNR range, so that when a curve is fitted to the obtained data points, the curve is not overly influenced by a cluster of points in any one area.

In the present embodiment, the model is a curve given by the equation:

$$S = [(A - C) / \alpha^B] + C$$

where α is the constellation ratio, S is the minimum SNR value corresponding to a given value of α, A is the minimum SNR value corresponding to α = 1, B is a predetermined constant, and C is a minimum SNR value corresponding to a predetermined maximum value of α. Here, C can be the SNR limit as α tends to infinity. This SNR limit could be considered as being the cut-off SNR value if HM was not used.

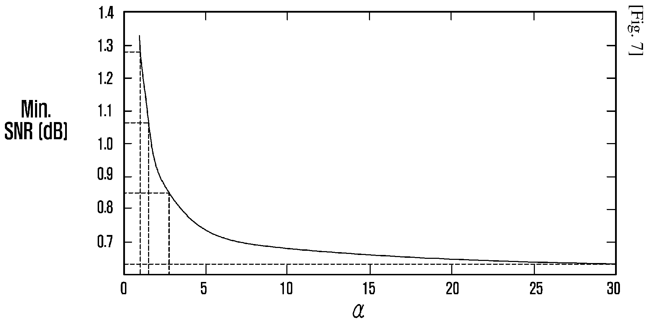

The N values of α are then obtained from the model by obtaining the values of α corresponding to the selected target SNR values. As described above, the target SNR values can be selected arbitrarily, and preferably can be selected at regular intervals to provide an optimised set of N values of α. In the present embodiment, as shown in Fig. 7, three target SNR values are chosen from a predetermined SNR range. The predetermined range is defined between a maximum cut-off SNR value corresponding to α = 1, and a minimum cut-off SNR value corresponding to the SNR limit as α approaches infinity. The target SNR values include the maximum cut-off SNR value, and two additional SNR values selected to divide the predetermined SNR range into regular intervals. The values of α obtained in the present embodiment are 1, 1.383, and 2.4. Because the target values are selected at regular intervals in the predetermined SNR range, these values of α are optimised. These values are only exemplary, and the precise value will depend on the initial parameters used to derive the model.

Furthermore, to obtain an optimised set of N values of α, corresponding to regular SNR intervals, the following equation derived from the model shown in Fig. 7 can be used:

$$\alpha_k = (k/N)^{\wedge}(-1/B)$$

where k is an integer from 1 to N, $\alpha_k$ is the $k^{th}$ value of $\alpha$, and B is a predetermined constant. It will be understood that this equation can be used to obtain the N values of $\alpha$ directly, without having to follow the above-described steps for generating the model.

Examples of optimised sets of N values of $\alpha$, for different values of N, are as follows:

N = 3 ; $\alpha$ = 1, 1.38, and 2.4
N = 4 ; $\alpha$ = 1, 1.26, 1.74, and 2.4
N = 6 ; $\alpha$ = 1, 1.16, 1.38, 1.74, 2.4, and 4.19

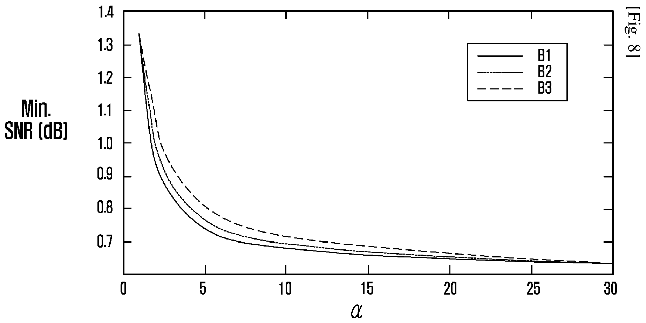

In embodiments of the present invention, a generated model can be adapted to take into account one or more environmental conditions, including channel fading, and/or mobile reception, and/or stationary reception. An example of a method of adapting the model of Fig. 6 to account for an environmental condition will now be described with reference to Fig. 8, according to an embodiment of the present invention.

In more detail, the value of the parameter B can be obtained in dependence on the one or more environmental conditions. In the present embodiment, the value of B is varied according to the severity of channel fading, and can range from 1 (no channel fading) to 2 (severe channel fading). Figure 8 shows three curves obtained for different values of B, illustrating the increase in cut-off SNR for any given value of $\alpha$ as the value of B is increased, corresponding to the channel fading becoming more severe. In Fig. 8, B1 < B2 < B3. For mobile and stationary reception, the value of B for mobile reception will typically be higher than the value of B for stationary reception.

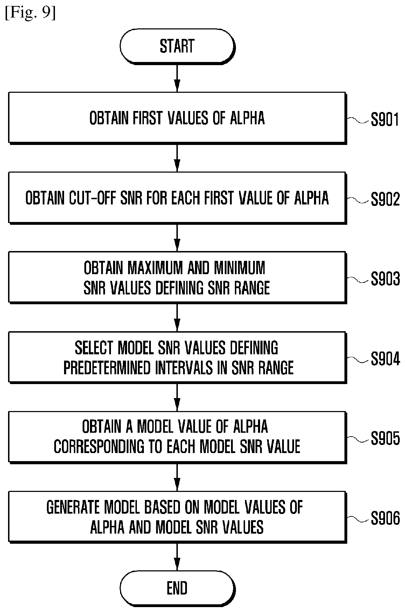

Referring now to Fig. 9, a method of generating a model is illustrated according to an embodiment of the present invention. The method corresponds to the method described above with reference to Figs. 3 to 7. First, in step S901, a plurality of first values of $\alpha$ are obtained. Then, in step S902, a cut-off SNR value required to give the predetermined performance measure at the receiver is obtained, for each one of the first values of $\alpha$. Next, in step S903, maximum and minimum SNR values are obtained to define an SNR range. In the present embodiment, the minimum SNR value corresponds to the highest value of $\alpha$ among the plurality of first values of $\alpha$, and the maximum SNR value corresponds to the lowest value of $\alpha$ among the plurality of first values of $\alpha$.

Then, in step S904, a plurality of model SNR values are selected which define predetermined intervals between the first and second SNR values. The model SNR values can include the maximum SNR value and/or the minimum SNR value. Next, in step S905, a plurality of model values of $\alpha$ are obtained by obtaining the values of $\alpha$ corresponding to each of the plurality of model SNR values. Finally, in step S906, the model is generated based on the plurality of model values of $\alpha$ and the plurality of model SNR values. The model can be generated by fitting a curve to the plurality of model values of $\alpha$ and the plurality of model SNR values, as described above with reference to Fig. 6.

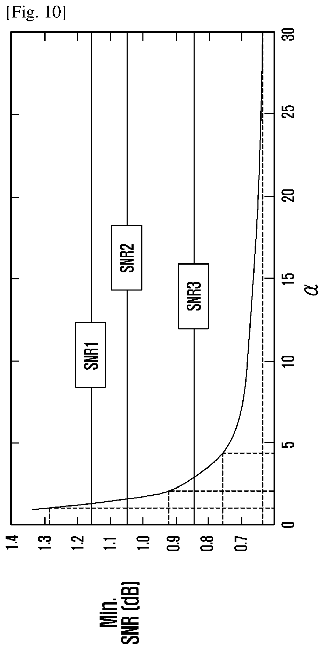

Referring now to Fig. 10, adding new values of $\alpha$ to a pre-existing set of values is illustrated, according to an embodiment of the present invention. In the present embodiment, the set of pre-existing values is the set of values defined in the DVB-T standard, namely 1, 2 and 4. In Fig. 10, dotted lines indicate the positions of the pre-existing values of $\alpha$ and the corresponding cut-off SNR values.

As in Fig. 7, in the present embodiment a predetermined SNR range can be defined between a maximum SNR value and a minimum SNR value. The pre-existing values of $\alpha$ divide the predetermined SNR range into sub-ranges, each sub-range being defined by two consecutive values of $\alpha$ among the pre-existing values of $\alpha$. In the present embodiment, three new values of $\alpha$, corresponding to target SNR values SNR1, SNR2 and SNR3, are inserted into the pre-existing set of $\alpha$ values. As shown in Fig. 10, two of the N values of $\alpha$ are inserted in the sub-range defined by the pre-existing values of $\alpha$ = 1 and $\alpha$ = 2, and the remaining one of the N values of $\alpha$ is inserted in the sub-range defined by the pre-existing values of $\alpha$ = 2 and $\alpha$ = 4. The final sub-range in Fig. 10 is not defined by two of the pre-existing values, but is defined by one of the existing values ($\alpha$ = 4) and the minimum SNR value as $\alpha$ tends to infinity.

Adding new values of $\alpha$ to a pre-existing set of values, instead of generating an entirely new set of values, has the advantage of providing backwards compatibility with equipment which is only set up to use the pre-existing values of $\alpha$. Preferably, when inserting new values into a sub-range defined by pre-existing values of $\alpha$, the new values are selected to divide the sub-range into regular intervals, so that the new values of $\alpha$ are optimised.

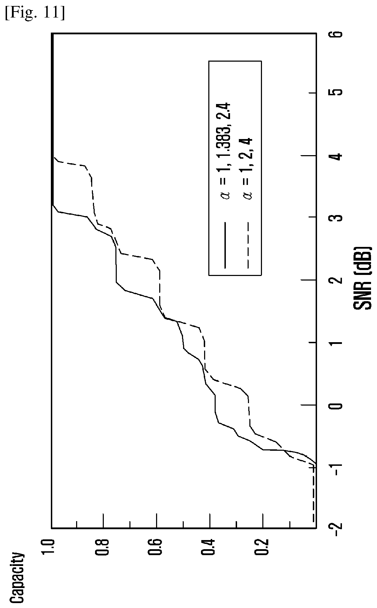

Referring now to Fig. 11, an increase in capacity offered by optimised values of $\alpha$ is illustrated, according to an embodiment of the present invention. In Fig. 11, the capacity is shown as a normalised capacity, obtained by dividing the actual capacity by the theoretical maximum capacity, corresponding to $\alpha$ = 1. In the present embodiment the optimised values are 1, 1.383, and 2.4, and the pre-existing (not optimised) set are 1, 2 and 4, as defined in DVB-T. Because the optimised values of $\alpha$ provide regular cut-off SNR intervals, in many cases it is possible to choose a more suitable value of $\alpha$ that offers a better compromise between cut-off SNR and data-carrying capacity. In some SNR regions, particularly around SNR values of 0, 2, and 3.5 dB, a 20% increase in capacity can be obtained in comparison to the pre-existing set of values.

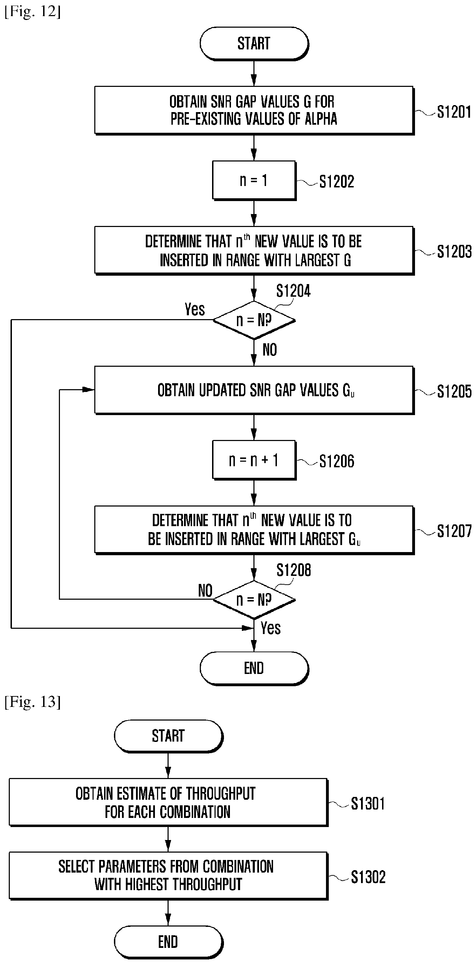

Referring now to Fig. 12, a method of inserting new values of $\alpha$ into a set of pre-existing values is illustrated, according to an embodiment of the present invention. As described above, the pre-existing values of $\alpha$ can define sub-ranges within a predetermined SNR range. First, in step S1201, an SNR gap value, G, is obtained for each pair of consecutive of pre-existing values of $\alpha$, as the difference between the cut-off SNR values corresponding to the two pre-existing values of $\alpha$. Each SNR gap value G is obtained based on:

$$G = (S_1 - S_2)$$

where $S_1$ is an SNR value corresponding to one of the pair of consecutive pre-existing values of $\alpha$ and $S_2$ is an SNR value corresponding to the other one of the pair of consecutive pre-existing values of $\alpha$. The SNR gap value G is therefore the width of the sub-range defined by the two consecutive pre-existing values of $\alpha$.

Next, in step S1202, the counter n is initialised to 1 to index the new value currently being processed. Then, in step S1203, it is determined that the first one of the N new values of $\alpha$ is to be inserted between the pair of consecutive pre-existing values of $\alpha$ having the largest value of G, that is, to be inserted into the sub-range having the largest SNR gap value G. Then, in step S1204, it is checked whether n = N, which is the total number of new values of $\alpha$. If n = N, then no more new values remain and the process ends. On the hand, if n < N, it needs to be determined where to insert the remaining new values, and the process proceeds to step S1205.

In step S1204, an updated SNR gap value $G_U$ is obtained for each sub-range based on:

$$G_U = (S_1 - S_2) / (n_k + 1)$$

where $n_k$ is the number of values of $\alpha$ already inserted into that sub-range. The updated SNR gap value for a sub-range is therefore the width of the intervals within the sub-range that would be obtained if the new, $n^{th}$, value of $\alpha$, were to be inserted into that sub-range along with any other new values already allocated to that sub-range, with the new values of $\alpha$ being inserted at regular intervals within the sub-range.

Next, in step S1206, the counter n is incremented by 1 to select the index of the new value currently being processed, and in step S1207, it is determined that the $n^{th}$ one of the N values of $\alpha$ is to be inserted in the sub-range having the largest value of $G_U$. Finally, in step S1208 it is checked whether n = N, that is, whether all new values of $\alpha$ have been allocated to a sub-range yet. If n = N, the process ends. If n < N, steps S1205 to S1208 are repeated until all of the N new values of $\alpha$ have been allocated to a sub-range.

Once all N new values of $\alpha$ have been allocated to a sub-range, the value of each new $\alpha$ can be obtained as before, by selecting target SNR values within the sub-ranges. Preferably, for the new values of $\alpha$ to be inserted into optimal positions between the existing values of $\alpha$, the target SNR values within a given sub-range are selected at regular intervals within that sub-range.

The method of Fig. 12 ensures that new values of $\alpha$ are inserted into a pre-existing set of values in such a way that the size of the largest SNR gap between any pair of consecutive values of $\alpha$, in the final combined set of values, is minimised.

Referring now to Fig. 13, a method of selecting an optimum combination of transmission parameters is illustrated, according to an embodiment of the present invention. The transmission parameters include the value of $\alpha$ to be used in transmitting the HM signal, a modulation scheme to be used, and/or a coding rate to be used. First, in step S1301 an estimate of an operating throughput is obtained for each one of a plurality of combinations of one of the N values of $\alpha$, available modulation schemes and/or coding rates. Then, in step S1302, the value of $\alpha$, the modulation scheme and/or the coding rate from the combination with the highest estimated throughput, are selected as the optimum transmission parameters for use when transmitting the HM signal.

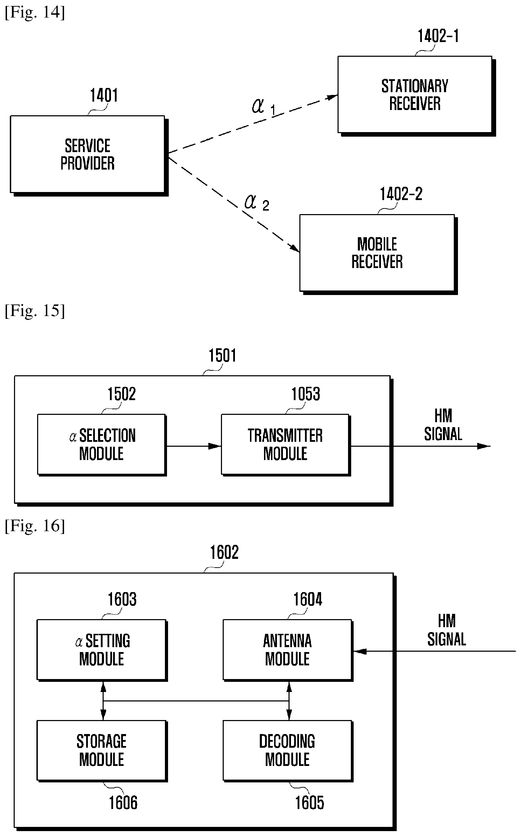

Referring now to Fig. 14, a system for providing content over an HM signal is illustrated, according to an embodiment of the present invention. The system includes a service provider 1401, a stationary receiver 1402-1, and a mobile receiver 1402-2. The service provider 1401 can transmit content to each of the receivers 1402-1, 1402-2 using different values of $\alpha_1$ and $\alpha_2$, or using the same value of $\alpha_1$ and $\alpha_2$. The values of $\alpha_1$ and $\alpha_2$ are values obtained using any of the above-described methods, meaning that the service provider 1401 can select values suitable for the receiver conditions without unnecessarily sacrificing capacity. Furthermore, the service provider can transmit HM signals in a plurality of physical layer pipes (PLPs), for example in a DVB-T2 system, and the value of $\alpha$ can be independently selected within each PLP. That is, different PLPs within an HM signal can have the same value of $\alpha$ or different values of $\alpha$. Here, the term PLP is used to refer to a set of physical layer resources with a given physical layer configuration, which can be tailored to carry services with given required quality of service (QoS).

Referring now to Fig. 15, apparatus for transmitting a hierarchical modulation HM signal is illustrated according to an embodiment of the present invention. The apparatus can be used by the service provider in the system of Fig. 14 to transmit the HM signal. The apparatus 1501 comprises a selection module 1502 arranged to select a value of a constellation ratio $\alpha$ from N values of $\alpha$. The N values of $\alpha$ are values which have been obtained using any of the above-described methods. The apparatus 1501 further comprises a transmitter module 1503 arranged to receive the selected value of $\alpha$ and transmit the HM signal using the selected value of $\alpha$. The transmitter module 1503 is also arranged to transmit information for identifying the selected value of $\alpha$. The in-

formation for identifying the selected value of $\alpha$ can be transmitted in the HM signal itself, or can be transmitted differently, for example can be provided to a receiver over a network connection. The information for identifying the selected value of $\alpha$ can be the actual value of $\alpha$.

As has been described above, the N values of $\alpha$ can be given by:

$$\alpha_k = (k/N)^{\wedge}(-1/B)$$

where k is an integer from 1 to N, $\alpha_k$ is the $k^{th}$ value of $\alpha$, and B is a predetermined constant. If the N values are obtained using this equation, the transmitter module 1503 can be further arranged to transmit the values of N and B, and to transmit the value of k as the information for identifying the selected value of $\alpha$.

The transmitter module 1503 can be further arranged to transmit HM signals for a plurality of services in a plurality of physical layer pipes PLPs. When a plurality of PLPs are used, the selection module 1502 can be arranged to independently select a value of $\alpha$ for each one of the PLPs. The transmitter module 1503 can then transmit, for each of the PLPs, the value of k corresponding to the value of $\alpha$ selected for that PLP. Furthermore, in some embodiments the selection module 1502 can independently select a value of N and/or B for each one of the PLPs, for example to account for different environmental conditions such as more severe channel fading in one PLP. In such embodiments, the transmitter module 1503 can be further arranged to transmit, for each of the PLPs, the selected values of N and/or B for that PLP.

In some embodiments, the information for identifying the selected value of $\alpha$ can be an index value corresponding to the selected value of $\alpha$. For example, the index value can be stored in a lookup table with the corresponding value of $\alpha$. The index value can be a binary word index, although the invention is not limited to this type of index value. When an index value is used, and services are transmitted in a plurality of PLPs, the transmitter module can be further arranged to transmit, for each of the PLPs, the index value corresponding to the value of $\alpha$ selected for that PLP.

The transmitter module can, for example, be arranged to transmit the HM signal according to a Digital Video Broadcasting DVB standard. However, in some embodiments another broadcasting standard utilising HM, other than DVB, can be used.

Referring now to Fig. 16, apparatus for receiving an HM signal is illustrated, according to an embodiment of the present invention. The apparatus can be used as a receiver in the system of Fig. 14 to receive an HM signal. As shown in Fig. 16, the apparatus 1602 comprises a constellation ratio setting module 1603 arranged to obtain information for identifying a value of a constellation ratio $\alpha$ from the received HM signal. The value of $\alpha$ is a value selected from N values of $\alpha$ which have been ob-

tained using any of the above-described methods. The apparatus 1602 further comprises an antenna module 1604 for receiving the HM signal. The constellation ratio setting module 1603 is arranged to identify the value of $\alpha$ based on the obtained information. The apparatus 1602 further comprises a decoding module 1605 arranged to decode the received HM signal based on the identified value of $\alpha$.

The constellation ratio setting module 1603 can be further arranged to obtain the values of N and a predetermined constant B from the received HM signal, obtain the value of an integer k as the information for identifying the selected value of $\alpha$, from the received HM signal, and identify the value of $\alpha$ based on:

$$\alpha = (k/N)^{\wedge}(-1/B).$$

The antenna module 1604 can be arranged to receive HM signals for a plurality of services in a plurality of physical layer pipes PLPs. In such embodiments, the constellation ratio setting module 1603 can be arranged to obtain, for each one of the plurality of PLPs, a value of k for the PLP from the HM signal received the PLP, and identify, for each one of the plurality of PLPs, the value of $\alpha$ for the PLP based on the obtained value of k. The decoding module 1605 can also be arranged to decode, for each one of the plurality of PLPs, the HM signal received in the PLP based on the identified value of $\alpha$. If different values of $\alpha$ are used for different PLPs, the constellation ratio setting module 1603 can be further arranged to obtain a different value of k for each one of the plurality of PLPs.

In some embodiments, the information for identifying the value of $\alpha$ can be an index value, and the apparatus can further comprise a storage module 1606 arranged to store one or more values of $\alpha$ each with a corresponding index value. For example, the index values can be stored in a lookup table with the corresponding values of $\alpha$. The index value can be a binary word index, although the invention is not limited to this type of index value. The constellation ratio setting module 1603 can be arranged to identify the value of $\alpha$ based on the obtained index value, by searching the N stored values of $\alpha$ using the index value obtained from the HM signal. The constellation ratio setting module 1603 can then select the stored value of $\alpha$ corresponding to the obtained index value as the identified value of $\alpha$.

When an index value is used, and services are received in a plurality of PLPs, the constellation ratio setting module 1603 can be arranged to obtain, for each of the PLPs, the index value corresponding to the value of $\alpha$ selected for that PLP, from the HM signal received in the PLP.

The antenna module can, for example, be arranged to receive the HM signal according to a Digital Video Broadcasting DVB standard. However, in some embodiments another broadcasting standard utilising HM, other than DVB, can be used. Examples of other standards to which the invention can be applied include, but are not limited to, an Advanced Television Systems Committee (ATSC) standard, an Integrated Services Digital Broadcasting (ISDB) standard, or a Terrestrial Digital Multimedia Broadcasting (T-DMB) standard.

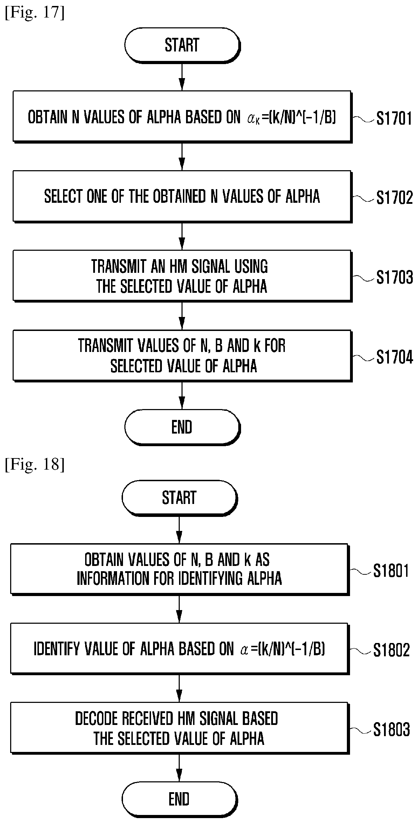

Referring now to Fig. 17, a method of transmitting an HM signal is illustrated, according to an embodiment of the present invention. First, in step S1701, N values of $\alpha$ are obtained based on the equation:

$$\alpha_k = (k/N)^{\wedge}(-1/B)$$

In other embodiments, however, the N values of $\alpha$ may be obtained differently, using any of the other above-described methods.

Next, in step S1702, one of the N values of $\alpha$ is selected, and in step S1703, an HM signal is transmitted using the selected value of $\alpha$. Then, in step S1704, values of k and N and/or B are transmitted to allow a receiver to identify the selected value of $\alpha$. It will be understood that although steps S1703 and S1704 are shown as separate steps, in embodiments in which the values of k, N and/or B are signalled in the HM signal itself, these steps may be performed together.

Furthermore, although in the present embodiment the values of k, N and/or B are transmitted, in other embodiments different information for identifying the selected value of $\alpha$ can be transmitted instead. For example, the actual value of $\alpha$ could be transmitted, or an index value corresponding to the selected value of $\alpha$ could be transmitted.

Referring now to Fig. 18, a method of decoding a received HM signal is illustrated, according to an embodiment of the present invention. First, in step S1801, the values of N, B and k are obtained as information for identifying a selected value of $\alpha$, for a received HM signal. The values of N, B and k are can all be obtained, for example, from the received HM signal itself. Alternatively, in some embodiments only the value of k may be received, and predetermined values of N and B can be retrieved. In other embodiments, only one out of N and B may be received, together with a value of k corresponding to the selected value of $\alpha$.

Then, in step S1802, a value of $\alpha$ is identified based on the equation:

$$\alpha = (k/N)^{\wedge}(-1/B)$$

This equation can be used in embodiments where transmitting equipment has used a value of $\alpha$ obtained using the above-described equation. In other embodiments, however, the selected value of $\alpha$ may have been obtained differently, using any of the other above-described methods. Therefore the invention is not limited to identifying a value of $\alpha$ based on the equation shown in step S1802.

Finally, in step S1803, the received HM signal is decoded based on the identified value of $\alpha$.

Furthermore, although in the present embodiment the values of k, N and/or B are obtained as the information for identifying the selected value of $\alpha$, it will be understood that in other embodiments the information may take a different form. For example, an index value corresponding to the selected value of $\alpha$ could be obtained.

Embodiments of the invention have been described which can provide values of $\alpha$ that avoid unnecessarily large gaps in cut-off SNR between consecutive values of $\alpha$, for a given number N of values. In a preferred embodiment, the values of $\alpha$ are optimised to have corresponding cut-off SNR values at regular intervals. Embodiments of the invention can be applied to any system in which HM signals are transmitted, for example a digital video broadcasting (DVB) system such as DVB-T or DVB-NGH. The above-described methods of obtaining N values of $\alpha$, and of transmitting and receiving HM signals, can be performed by dedicated hardware modules and/or by software instructions in a software program stored in a computer-readable storage medium.

Furthermore, embodiments of the present invention have been described in which N values of $\alpha$ are obtained by modelling the variation in cut-off SNR with $\alpha$. In particular, a method has been described with reference to Figs. 3 to 7 in which the variation with $\alpha$ itself is considered. However, in another embodiment the model can be obtained by modelling the variation in cut-off SNR as a function of another function of $\alpha$. For example, the variation in cut-off SNR can be modelled as a function of $1/\alpha$. In another embodiment the variation in cut-off SNR can be modelled as a function of $\beta = \alpha/(\alpha + 1)$. It will be understood that the invention is not limited to these functions of $\alpha$, and in other embodiments the model can be obtained for any function of $\alpha$.

Whilst certain embodiments of the present invention have been described above, it will be understood that many variations and modifications are possible without departing from the scope of the invention as defined in the accompanying claims.

**Claims**

1. A method of obtaining N values of a constellation ratio $\alpha$ for use when transmitting a hierarchical modulation, HM, signal, wherein the constellation ratio $\alpha$ is defined as the ratio of the separation between constellation points used for a first stream and the separation between constellation points used for a second stream in the HM signal, the method comprising:

   obtaining a model of the variation in a minimum signal-to-noise ratio, SNR, required to provide a predetermined performance measure at a receiver, as a function of $\alpha$;
selecting N target SNR values; and
obtaining each of the N values of $\alpha$, based on the model, by obtaining the value of $\alpha$ corresponding to each of the target SNR values, wherein the method is **characterised in that** obtaining the model comprises:

> obtaining, for each one of a plurality of first values of $\alpha$, a first minimum SNR value required to provide the predetermined performance measure at the receiver; and
> generating the model of the variation based on the plurality of first values of $\alpha$ and the first minimum SNR values associated with each one of the plurality of first values of $\alpha$, and

wherein the model is a curve of the form:

$$S = [(A - C) / \alpha^{B}] + C$$

> where $\alpha$ is the constellation ratio, S is the minimum SNR value corresponding to a given value of $\alpha$, A is the minimum SNR value corresponding to $\alpha = 1$, B is a predetermined constant, and C is a minimum SNR value corresponding to a predetermined maximum value of $\alpha$.

2. The method of claim 1, wherein the target SNR values are SNR values at regular intervals within a predetermined SNR range.

3. The method of claim 1, wherein the target SNR values are SNR values within a predetermined SNR range, the predetermined SNR range being divided into one or more sub-ranges, and one or more of the target SNR values being SNR values selected at regular intervals within at least one of the one or more sub-ranges, and
wherein each of the one or more sub-ranges is a range defined by two consecutive values of $\alpha$ among a predefined plurality of values of $\alpha$.

4. The method of any one of claims 1 to 3, wherein obtaining the model comprises:

> obtaining, for each one of a plurality of first values of $\alpha$, a first minimum SNR value required to provide the predetermined performance measure at the receiver ; and
> generating the model of the variation in the minimum SNR values with $\alpha$,

wherein generating the model comprises:

> obtaining a first SNR value corresponding to the highest value of $\alpha$ among the plurality of first values of $\alpha$;
> obtaining a second SNR value corresponding to the lowest value of $\alpha$ among the plurality of first values of $\alpha$;
> selecting a plurality of model SNR values which define predetermined intervals between the first and second SNR values;
> obtaining a plurality of second values of $\alpha$ by obtaining the values of $\alpha$ corresponding to each of the plurality of model SNR values; and
> generating the model based on the plurality of second values of $\alpha$ and the plurality of model SNR values,

wherein generating the model based on the plurality of second values of $\alpha$ and the plurality of model SNR values comprises fitting a curve to the plurality of second values of $\alpha$ and the plurality of model SNR values.

5. The method of any one of the preceding claims, wherein the obtained N values of $\alpha$ are for insertion among a plurality of predefined third values of $\alpha$, and wherein the one or more target SNR values are selected within one or more SNR ranges defined by consecutive ones of the third values of $\alpha$, and further comprising:

> obtaining, for each pair of consecutive third values of $\alpha$, an SNR gap value G based on:

$$G = (S_1 - S_2)$$

> where $S_1$ is an SNR value corresponding to one of said pair of consecutive third values of $\alpha$ and $S_2$ is an SNR value corresponding to the other one of said pair of consecutive third values of $\alpha$;
> determining that a first one of the N values of $\alpha$ is to be inserted between the pair of consecutive third values of $\alpha$ having the largest value of G; and
> determining where to insert any remaining ones of the N values by:

>> obtaining an updated SNR gap value $G_U$ for each pair of consecutive third values of $\alpha$ based on:

$$G_U = (S_1 - S_2) / (n_\alpha + 1)$$

>> where $n_\alpha$ is the number of values of $\alpha$ al-

ready inserted between said pair of consecutive third values of α;
determining that the next one of the N values of α is to be inserted between the pair of consecutive third values of α having the largest value of $G_U$; and

repeating until all of the N values of α have been inserted.

6. The method of any one of the preceding claims, further comprising:

obtaining, for each one of a plurality of combinations of one of the N values of α, available modulation schemes and/or coding rates, an estimate of an operating throughput; and
selecting the value of α, the modulation scheme and/or the coding rate from the combination with the highest estimated throughput, for use when transmitting the HM signal,

wherein obtaining the model of the variation in the minimum SNR as a function of α comprises obtaining the model as a function of α, or as a function of 1/α, or as a function of β, wherein β = α/( α + 1) and wherein the N values of α are obtained based on:

$$\alpha_k = (k/N)^{\wedge}(-1/B)$$

where k is an integer from 1 to N, $\alpha_k$ is the k$^{th}$ value of α, and B is a predetermined constant.

7. A computer-readable storage medium arranged to store a computer program, which when executed, performs a method according to any one of the preceding claims.

8. A transmitter for transmitting a hierarchical modulation, HM, signal, the transmitter comprising:

a transceiver configured to transmit or receive signals; and
a controller configured to obtain a model of the variation in a minimum signal-to-noise ratio, SNR, required to provide a predetermined performance measure at a receiver, as a function of a constellation ratio α, select N target SNR values, and obtain each of the N values of α, based on the model, by obtaining the value of α corresponding to each of the target SNR values, wherein the constellation ratio α is defined as the ratio of the separation between constellation points used for a first stream and the separation between constellation points used for a second stream in the HM signal, wherein the transmitter is **characterised in that** the controller is further configured to:

obtain, for each one of a plurality of first values of α, a first minimum SNR value required to provide the predetermined performance measure at the receiver; and
generate the model of the variation based on the plurality of first values of α and the first minimum SNR values associated with each one of the plurality of first values of α, and
wherein the model is a curve of the form:

$$S = [(A - C) / \alpha^B] + C$$

where α is the constellation ratio, S is the minimum SNR value corresponding to a given value of α, A is the minimum SNR value corresponding to α = 1, B is a predetermined constant, and C is a minimum SNR value corresponding to a predetermined maximum value of α.

9. The transmitter of claim 8, wherein the target SNR values are SNR values at regular intervals within a predetermined SNR range.

10. The transmitter of claim 8, wherein the target SNR values are SNR values within a predetermined SNR range, the predetermined SNR range being divided into one or more sub-ranges, and one or more of the target SNR values being SNR values selected at regular intervals within at least one of the one or more sub-ranges, and wherein each of the one or more sub-ranges is a range defined by two consecutive values of α among a predefined plurality of values of α.

11. The transmitter of any one of claims 8 to 10, wherein the controller is further configured to:

obtain, for each one of a plurality of first values of α, a first minimum SNR value required to provide the predetermined performance measure at the receiver; and
generate the model of the variation in the minimum SNR values with α,

wherein generating the model comprises:

obtaining a first SNR value corresponding to the highest value of α among the plurality of first values of α;
obtaining a second SNR value corresponding to the lowest value of α among the plurality of first

values of $\alpha$;
selecting a plurality of model SNR values which define predetermined intervals between the first and second SNR values;
obtaining a plurality of second values of $\alpha$ by obtaining the values of $\alpha$ corresponding to each of the plurality of model SNR values; and generating the model based on the plurality of second values of $\alpha$ and the plurality of model SNR values,

wherein generating the model based on the plurality of second values of $\alpha$ and the plurality of model SNR values comprises fitting a curve to the plurality of second values of $\alpha$ and the plurality of model SNR values.

12. The transmitter of any one of the preceding claims, wherein the obtained N values of $\alpha$ are for insertion among a plurality of predefined third values of $\alpha$, and wherein the one or more target SNR values are selected within one or more SNR ranges defined by consecutive ones of the third values of $\alpha$, and the controller is further configured to:

obtain, for each pair of consecutive third values of $\alpha$, an SNR gap value G based on:

$$G = (S_1 - S_2)$$

where $S_1$ is an SNR value corresponding to one of said pair of consecutive third values of $\alpha$ and $S_2$ is an SNR value corresponding to the other one of said pair of consecutive third values of $\alpha$; determine that a first one of the N values of $\alpha$ is to be inserted between the pair of consecutive third values of $\alpha$ having the largest value of G; and
determine where to insert any remaining ones of the N values by:

obtaining an updated SNR gap value $G_U$ for each pair of consecutive third values of $\alpha$ based on:

$$G_U = (S_1 - S_2) / (n_\alpha + 1)$$

where $n_\alpha$ is the number of values of $\alpha$ already inserted between said pair of consecutive third values of $\alpha$;
determining that the next one of the N values of $\alpha$ is to be inserted between the pair of consecutive third values of $\alpha$ having the largest value of $G_U$; and

repeating until all of the N values of $\alpha$ have been inserted.

13. The transmitter of any one of the preceding claims, wherein the controller is further configured to:

obtain, for each one of a plurality of combinations of one of the N values of $\alpha$, available modulation schemes and/or coding rates, an estimate of an operating throughput; and
select the value of $\alpha$, the modulation scheme and/or the coding rate from the combination with the highest estimated throughput, for use when transmitting the HM signal,

wherein obtaining the model of the variation in the minimum SNR as a function of $\alpha$ comprises obtaining the model as a function of $\alpha$, or as a function of $1/\alpha$, or as a function of $\beta$, wherein $\beta = \alpha/(\alpha + 1)$ and wherein the N values of $\alpha$ are obtained based on:

$$\alpha_k = (k/N)^{(-1/B)}$$

where k is an integer from 1 to N, $\alpha_k$ is the $k^{th}$ value of $\alpha$, and B is a predetermined constant.

**Patentansprüche**

1. Verfahren des Erlangens von N Werten eines Konstellationsverhältnisses $\alpha$ zur Verwendung beim Senden eines Signals mit hierarchischer Modulation, HM-Signals, wobei das Konstellationsverhältnis $\alpha$ definiert ist als das Verhältnis der Separation zwischen Konstellationspunkten, die für einen ersten Strom verwendet werden, und der Separation zwischen Konstellationspunkten, die für einen zweiten Strom im HM-Signal verwendet werden, wobei das Verfahren Folgendes umfasst:

Erlangen eines Modells der Variation in einem Minimal-Störabstand, Signal-to-Noise Ratio, Minimal-SNR, der erforderlich ist, um eine vorgegebenes Leistungsmaß an einem Empfänger bereitzustellen, als Funktion von $\alpha$;
Auswählen von N Ziel-SNR-Werten und Erlangen jedes der N Werte von $\alpha$ basierend auf dem Modell durch Erlangen der Werte von $\alpha$, die jedem der Ziel-SNR-Werte entsprechen, wobei das Verfahren **dadurch gekennzeichnet ist, dass** Erlangen des Modells Folgendes umfasst:

Erlangen eines ersten Minimal-SNR-Wertes, der erforderlich ist, um das vorgegebene Leistungsmaß am Empfänger bereitzustellen, für einen jeden von mehreren ersten Werten von $\alpha$ und

Erzeugen des Modells der Variation basierend auf den mehreren ersten Werten von $\alpha$ und den ersten Minimal-SNR-Werten, die einem jeden der ersten Werte von $\alpha$ zugeordnet sind, und

wobei das Modell eine Kurve der Form

$$S = [(A - C) / \alpha^B] + C$$

ist,

wobei $\alpha$ das Konstellationsverhältnis ist, S der Minimal-SNR-Wert ist, der einem gegebenen Wert von $\alpha$ entspricht, A der Minimal-SNR-Wert ist, der $\alpha = 1$ entspricht, B eine vorgegebene Konstante ist und C ein Minimal-SNR-Wert ist, der einem vorgegebenen Maximalwert von $\alpha$ entspricht.

2. Verfahren nach Anspruch 1, wobei die Ziel-SNR-Werte SNR-Werte in regelmäßigen Intervallen innerhalb eines vorgegebenen SNR-Bereiches sind.

3. Verfahren nach Anspruch 1, wobei die Ziel-SNR-Werte SNR-Werte innerhalb eines vorgegebenen SNR-Bereiches sind, wobei der vorgegebene SNR-Bereich in einen oder mehrere Unterbereiche geteilt ist und einer oder mehrere der Ziel-SNR-Werte SNR-Werte sind, die in regelmäßigen Intervallen innerhalb mindestens eines der einen oder mehreren Unterbereiche ausgewählt werden, und wobei jeder der einen oder mehreren Unterbereiche ein Bereich ist, der durch zwei aufeinanderfolgende Werte von $\alpha$ unter einer vordefinierten Mehrzahl von Werten von $\alpha$ definiert ist.

4. Verfahren nach einem der Ansprüche 1 bis 3, wobei Erlangen des Modells Folgendes umfasst:

Erlangen eines ersten Minimal-SNR-Wertes, der erforderlich ist, um das vorgegebene Leistungsmaß am Empfänger bereitzustellen, für einen jeden von mehreren ersten Werten von $\alpha$ und
Erzeugen des Modells der Variation in den Minimal-SNR-Werten mit $\alpha$, wobei Erzeugen des Modells Folgendes umfasst:

Erlangen eines ersten SNR-Wertes, der dem höchsten Wert von $\alpha$ unter den mehreren ersten Werten von $\alpha$ entspricht;
Erlangen eines zweiten SNR-Wertes, der dem niedrigsten Wert von $\alpha$ unter den meh-

reren ersten Werten von $\alpha$ entspricht;
Auswählen mehrerer Modell-SNR-Werte, die vorgegebene Intervalle zwischen den ersten und zweiten SNR-Werten definieren;
Erlangen mehrerer zweiter Werte von $\alpha$ durch Erlangen der Werte von $\alpha$, die jedem der mehreren Modell-SNR-Werte entsprechen; und
Erzeugen des Modells basierend auf den mehreren zweiten Werten von $\alpha$ und den mehreren Modell-SNR-Werten,

wobei Erzeugen des Modells basierend auf den mehreren zweiten Werten von $\alpha$ und den mehreren Modell-SNR-Werten Anpassen einer Kurve an die mehreren zweiten Werte von $\alpha$ und die mehreren Modell-SNR-Werte umfasst.

5. Verfahren nach irgendeinem der vorhergehenden Ansprüche, wobei die erlangten N Werte von $\alpha$ zum Einfügen unter mehrere vordefinierte dritte Werte von $\alpha$ sind und
wobei die einen oder mehreren Ziel-SNR-Werte innerhalb einer oder mehrerer SNR-Bereiche ausgewählt werden, die durch Aufeinanderfolgende der dritten Werte von $\alpha$ definiert sind, und
wobei das Verfahren ferner Folgendes umfasst:

Erlangen eines SNR-Lücken-Wertes G für jedes Paar aufeinanderfolgender dritter Werte von $\alpha$ basierend auf

$$G = (S_1 - S_2),$$

wobei $S_1$ ein SNR-Wert ist, der einem des Paares aufeinanderfolgender dritter Werte von $\alpha$ entspricht, und $S_2$ ein SNR-Wert ist, der dem anderen des Paares aufeinanderfolgender dritter Werte von $\alpha$ entspricht;
Bestimmen, dass ein Erster der N Werte von $\alpha$ zwischen dem Paar aufeinanderfolgender dritter Werte von $\alpha$ einzufügen ist, das den größten Wert von G aufweist; und
Bestimmen, wo jedwede Übrigen der N Werte einzufügen sind, durch
Erlangen eines aktualisierten SNR-Lücken-Wertes $G_U$ für jedes Paar aufeinanderfolgender dritter Werte von $\alpha$ basierend auf

$$G_U = (S_1 - S_2)/(n_\alpha + 1),$$

wobei $n_\alpha$ die Anzahl von Werten von $\alpha$ ist, die bereits zwischen jedem Paar aufeinanderfolgender dritter Werte von $\alpha$ eingefügt worden sind;

Bestimmen, dass der Nächste der N Werte von α zwischen dem Paar aufeinanderfolgender dritter Werte von α einzufügen ist, das den größten Wert von $G_U$ aufweist; und
Wiederholen, bis alle N Werte von α eingefügt worden sind.

6. Verfahren nach irgendeinem der vorhergehenden Ansprüche, das ferner Folgendes umfasst:

Erlangen verfügbarer Modulationsschemata und/oder Codierraten, einer Schätzung eines Betriebsdurchsatzes für eine jede von mehreren Kombinationen eines der N Werte von α; und
Auswählen des Wertes von α, des Modulationsschemas und/oder der Codierrate aus der Kombination mit dem höchsten geschätzten Durchsatz zur Verwendung beim Senden des HM-Signals,
wobei Erlangen des Modells der Variation im Minimal-SNR als Funktion von α Erlangen des Modells als Funktion von α oder als Funktion von 1/α oder als Funktion von β umfasst, wobei β = α/(α + 1) ist und
wobei die N Werte von α basierend auf

$$\alpha_k = (k/N)^{(-1/B)}$$

erlangt werden,
wobei k eine ganze Zahl von 1 bis N ist, $\alpha_k$ der k-te Wert von α ist und B eine vorgegebene Konstante ist.

7. Computerlesbares Speichermedium, das ausgelegt ist, ein Computerprogramm zu speichern, das, wenn es ausgeführt wird, ein Verfahren nach irgendeinem der vorgehenden Ansprüche durchführt.

8. Sender zum Senden eines Signals mit hierarchischer Modulation, HM-Signals, wobei der Sender Folgendes umfasst:

einen Sendeempfänger, der konfiguriert ist, Signale zu senden oder zu empfangen; und
eine Steuerung, die konfiguriert ist, ein Modell der Variation in einem Minimal-Störabstand, Signal-to-Noise Ratio, Minimal-SNR, der erforderlich ist, um eine vorgegebenes Leistungsmaß an einem Empfänger bereitzustellen, als Funktion eines Konstellationsverhältnisses α zu erlangen, N Ziel-SNR-Werte auszuwählen und jeden der N Werte von α basierend auf dem Modell durch Erlangen der Werte von α zu erlangen, die jedem der Ziel-SNR-Werte entsprechen, wobei das Konstellationsverhältnis α definiert ist als das Verhältnis der Separation zwischen Konstellationspunkten, die für einen ersten Strom verwendet werden, und der Separation zwischen Konstellationspunkten, die für einen zweiten Strom im HM-Signal verwendet werden,
wobei der Sender **dadurch gekennzeichnet ist, dass**
die Steuerung ferner konfiguriert ist,
für einen jeden von mehreren ersten Werten von α einen ersten Minimal-SNR-Wert zu erlangen, der erforderlich ist, um das vorgegebene Leistungsmaß am Empfänger bereitzustellen; und
das Modell der Variation basierend auf den mehreren ersten Werten von α und den ersten Minimal-SNR-Werten zu erzeugen, die einem jeden der ersten Werte von α zugeordnet sind, und
wobei das Modell eine Kurve der Form

$$S = [(A - C) / \alpha^B] + C$$

ist,

wobei α das Konstellationsverhältnis ist, S der Minimal-SNR-Wert ist, der einem gegebenen Wert von α entspricht, A der Minimal-SNR-Wert ist, der α = 1 entspricht, B eine vorgegebene Konstante ist und C ein Minimal-SNR-Wert ist, der einem vorgegebenen Maximalwert von α entspricht.

9. Sender nach Anspruch 8, wobei die Ziel-SNR-Werte SNR-Werte in regelmäßigen Intervallen innerhalb eines vorgegebenen SNR-Bereiches sind.

10. Sender nach Anspruch 8, wobei die Ziel-SNR-Werte SNR-Werte innerhalb eines vorgegebenen SNR-Bereiches sind, wobei der vorgegebene SNR-Bereich in einen oder mehrere Unterbereiche geteilt ist und einer oder mehrere der Ziel-SNR-Werte SNR-Werte sind, die in regelmäßigen Intervallen innerhalb mindestens eines der einen oder mehreren Unterbereiche ausgewählt werden, und
wobei jeder der einen oder mehreren Unterbereiche ein Bereich ist, der durch zwei aufeinanderfolgende Werte von α unter einer vordefinierten Mehrzahl von Werten von α definiert ist.

11. Sender nach irgendeinem der Ansprüche 8 bis 10, wobei die Steuerung ferner konfiguriert ist,
für einen jeden von mehreren ersten Werten von α einen ersten Minimal-SNR-Wert zu erlangen, der erforderlich ist, um das vorgegebene Leistungsmaß am Empfänger bereitzustellen; und
das Modell der Variation in den Minimal-SNR-Werten mit α zu erzeugen, wobei Erzeugen des Modells Folgendes umfasst:

> Erlangen eines ersten SNR-Wertes, der dem höchsten Wert von $\alpha$ unter den mehreren ersten Werten von $\alpha$ entspricht;
> Erlangen eines zweiten SNR-Wertes, der dem niedrigsten Wert von $\alpha$ unter den mehreren ersten Werten von $\alpha$ entspricht;
> Auswählen mehrerer Modell-SNR-Werte, die vorgegebene Intervalle zwischen den ersten und zweiten SNR-Werten definieren;
> Erlangen mehrerer zweiter Werte von $\alpha$ durch Erlangen der Werte von $\alpha$, die jedem der mehreren Modell-SNR-Werte entsprechen; und
> Erzeugen des Modells basierend auf den mehreren zweiten Werten von $\alpha$ und den mehreren Modell-SNR-Werten,
> wobei Erzeugen des Modells basierend auf den mehreren zweiten Werten von $\alpha$ und den mehreren Modell-SNR-Werten Anpassen einer Kurve an die mehreren zweiten Werte von $\alpha$ und die mehreren Modell-SNR-Werte umfasst.

12. Sender nach irgendeinem der vorhergehenden Ansprüche, wobei die erlangten N Werte von $\alpha$ zum Einfügen unter mehrere vordefinierte dritte Werte von $\alpha$ sind und wobei die einen oder mehreren Ziel-SNR-Werte innerhalb einer oder mehrerer SNR-Bereiche ausgewählt werden, die durch Aufeinanderfolgende der dritten Werte von $\alpha$ definiert sind, und die Steuerung ferner konfiguriert ist,
für jedes Paar aufeinanderfolgender dritter Werte von $\alpha$ einen SNR-Lücken-Wert G basierend auf

$$G = (S_1 - S_2)$$

zu erlangen,

> wobei $S_1$ ein SNR-Wert ist, der einem des Paares aufeinanderfolgender dritter Werte von $\alpha$ entspricht, und $S_2$ ein SNR-Wert ist, der dem anderen des Paares aufeinanderfolgender dritter Werte von $\alpha$ entspricht;
> zu bestimmen, dass ein Erster der N Werte von $\alpha$ zwischen dem Paar aufeinanderfolgender dritter Werte von $\alpha$ einzufügen ist, das den größten Wert von G aufweist; und
> zu bestimmen, wo jedwede Übrigen der N Werte einzufügen sind, durch

Erlangen eines aktualisierten SNR-Lücken-Wertes $G_U$ für jedes Paar aufeinanderfolgender dritter Werte von $\alpha$ basierend auf

$$G_U = (S_1 - S_2)/(n_\alpha + 1),$$

wobei $n_\alpha$ die Anzahl von Werten von $\alpha$ ist, die bereits zwischen jedem Paar aufeinanderfolgender dritter Werte von $\alpha$ eingefügt worden sind;
Bestimmen, dass der Nächste der N Werte von $\alpha$ zwischen dem Paar aufeinanderfolgender dritter Werte von $\alpha$ einzufügen ist, das den größten Wert von $G_U$ aufweist; und
Wiederholen, bis alle N Werte von $\alpha$ eingefügt worden sind.

13. Sender nach irgendeinem der vorhergehenden Ansprüche, wobei die Steuerung ferner konfiguriert ist, für eine jede von mehreren Kombinationen eines der N Werte von $\alpha$ verfügbare Modulationsschemata und/oder Codierraten, eine Schätzung eines Betriebsdurchsatzes zu erlangen und
den Wert von $\alpha$, das Modulationsschema und/oder die Codierrate aus der Kombination mit dem höchsten geschätzten Durchsatz zur Verwendung beim Senden des HM-Signals auszuwählen,
wobei Erlangen des Modells der Variation im Minimal-SNR als Funktion von $\alpha$ Erlangen des Modells als Funktion von $\alpha$ oder als Funktion von $1/\alpha$ oder als Funktion von $\beta$ umfasst, wobei $\beta = \alpha/(\alpha+1)$ ist und wobei die N Werte von $\alpha$ basierend auf

$$\alpha_k = (k/N)^{(-1/B)}$$

erlangt werden,

> wobei k eine ganze Zahl von 1 bis N ist, $\alpha_k$ der k-te Wert von $\alpha$ ist und B eine vorgegebene Konstante ist.

**Revendications**

1. Procédé d'obtention de N valeurs d'un rapport de constellation $\alpha$ à utiliser lors de la transmission d'un signal de modulation hiérarchique, HM, dans lequel le rapport de constellation $\alpha$ est défini en tant que rapport de la séparation entre des points de constellation utilisés pour un premier flux et de la séparation entre des points de constellation utilisés pour un deuxième flux dans le signal HM, le procédé comprenant :

> l'obtention d'un modèle de la variation d'un rapport de signal sur bruit, SNR, minimal nécessaire pour fournir une mesure de performance prédéterminée à un récepteur, en fonction de $\alpha$ ;
> la sélection de N valeurs de SNR cibles ; et
> l'obtention de chacune des N valeurs de $\alpha$, sur la base du modèle, par l'obtention de la valeur de $\alpha$ correspondant à chacune de valeurs de SNR cibles,

dans lequel le procédé est **caractérisé en ce que** l'obtention du modèle comprend :

l'obtention, pour chacune d'une pluralité de premières valeurs de $\alpha$, d'une première valeur de SNR minimale nécessaire pour fournir la mesure de performance prédéterminée au récepteur ; et

la génération du modèle de la variation sur la base de la pluralité de premières valeurs de $\alpha$ et des premières valeurs de SNR minimales associées à chacune de la pluralité de premières valeurs de $\alpha$, et

dans lequel le modèle est une courbe de la forme :

$$S=[(A-C)/\alpha^B]+C$$

où $\alpha$ est le rapport de constellation, S est la valeur de SNR minimale correspondant à une valeur donnée de $\alpha$, A est la valeur de SNR minimale correspondant à $\alpha=1$, B est une constante prédéterminée, et C est une valeur de SNR minimale correspondant à une valeur maximale prédéterminée de $\alpha$.

2. Procédé selon la revendication 1, dans lequel les valeurs de SNR cibles sont des valeurs de SNR à des intervalles réguliers à l'intérieur d'une plage de SNR prédéterminée.

3. Procédé selon la revendication 1, dans lequel les valeurs de SNR cibles sont des valeurs de SNR à l'intérieur d'une plage de SNR prédéterminée, la plage de SNR prédéterminée étant divisée en une ou plusieurs sous-plages, et une ou plusieurs des valeurs de SNR cibles étant des valeurs de SNR sélectionnées à des intervalles réguliers à l'intérieur d'au moins l'une de l'une ou plusieurs sous-plages, et dans lequel chacune de l'une ou plusieurs sous-plages est une plage définie par deux valeurs consécutives de $\alpha$ parmi une pluralité prédéfinie de valeurs de $\alpha$.

4. Procédé selon l'une quelconque des revendications 1 à 3, dans lequel l'obtention du modèle comprend:

l'obtention, pour chacune d'une pluralité de premières valeurs de $\alpha$, d'une première valeur de SNR minimale nécessaire pour fournir la mesure de performance prédéterminée au récepteur ; et

la génération du modèle de la variation des valeurs de SNR minimales avec $\alpha$, dans lequel la génération du modèle comprend:

l'obtention d'une première valeur de SNR correspondant à la plus grande valeur de $\alpha$ parmi la pluralité de premières valeurs de $\alpha$;

l'obtention d'une deuxième valeur de SNR correspondant à la plus petite valeur de $\alpha$ parmi la pluralité de premières valeurs de $\alpha$;

la sélection d'une pluralité de valeurs de SNR de modèle qui définissent des intervalles prédéterminés entre les première et deuxième valeurs de SNR ;

l'obtention d'une pluralité de deuxièmes valeurs de $\alpha$ par l'obtention des valeurs de $\alpha$ correspondant à chacune de la pluralité de valeurs de SNR de modèle; et

la génération du modèle sur la base de la pluralité de deuxièmes valeurs de $\alpha$ et de la pluralité de valeurs de SNR de modèle,

dans la génération du modèle sur la base de la pluralité de deuxièmes valeurs de $\alpha$ et de la pluralité de valeurs de SNR de modèle comprend l'ajustement d'une courbe à la pluralité de deuxièmes valeurs de $\alpha$ et à la pluralité de valeurs de SNR de modèle.

5. Procédé selon l'une quelconque des revendications précédentes, dans lequel les N valeurs obtenues de $\alpha$ sont destinées à être insérées parmi une pluralité de troisièmes valeurs prédéfinies de $\alpha$, et dans lequel l'une ou plusieurs valeurs de SNR cibles sont sélectionnées à l'intérieur d'une ou plusieurs plages de SNR définies par des troisièmes valeurs consécutives parmi les troisièmes valeurs de $\alpha$, et comprenant en outre:

l'obtention, pour chaque paire de troisièmes valeurs consécutives de $\alpha$, d'une valeur d'écart de SNR G sur la base de :

$$G=(S_1-S_2)$$

où $S_1$ est une valeur de SNR correspondant à l'une de ladite paire de troisièmes valeurs consécutives de $\alpha$ et $S_2$ est une valeur de SNR correspondant à l'autre de ladite paire de troisièmes valeurs consécutives de $\alpha$;

la détermination qu'une première des N valeurs de $\alpha$ doit être insérée entre la paire de troisièmes valeurs consécutives de $\alpha$ ayant la plus grande valeur de G ; et

la détermination d'où insérer celles restantes des N valeurs par :

l'obtention d'une valeur d'écart de SNR mise à jour $G_U$ pour chaque paire de troisièmes valeurs consécutives de $\alpha$ sur la base de :

$$G_U = (S_1 - S_2) / (n_\alpha + 1)$$

où $n_\alpha$ est le nombre de valeurs de $\alpha$ déjà insérées entre ladite paire de troisièmes valeurs consécutives de $\alpha$ ; la détermination que la valeur suivante des N valeurs de $\alpha$ doit être insérée entre la paire de troisièmes valeurs consécutives de $\alpha$ ayant la plus grande valeur de $G_U$ ; et la répétition jusqu'à ce que toutes les N valeurs de $\alpha$ aient été insérées.

6. Procédé selon l'une quelconque des revendications précédentes, comprenant en outre :

l'obtention, pour chacune d'une pluralité de combinaisons de l'une des N valeurs de $\alpha$, de schémas de modulation disponibles et/ou de taux de codage, d'une estimation d'un rendement de fonctionnement ; et la sélection de la valeur de $\alpha$, du schéma de modulation et/ou du taux de codage à partir de la combinaison avec le plus grand rendement estimé, pour leur utilisation lors de la transmission du signal HM, dans lequel l'obtention du modèle de la variation du SNR minimal en fonction de $\alpha$ comprend l'obtention du modèle en fonction de $\alpha$, ou en fonction de $1/\alpha$, ou en fonction de $\beta$, où $\beta = \alpha/(\alpha+1)$ et dans lequel les N valeurs de $\alpha$ sont obtenues sur la base de :

$$\alpha_k = (k/N)^{\wedge}(-1/B)$$

où k est un nombre entier de 1 à N, $\alpha_k$ est la $k^{ième}$ valeur de $\alpha$, et B est une constante prédéterminée.

7. Support de mémorisation lisible par ordinateur agencé pour mémoriser un programme informatique qui, lorsqu'il est exécuté, effectue un procédé selon l'une quelconque des revendications précédentes.

8. Emetteur pour la transmission d'un signal de modulation hiérarchique, HM, l'émetteur comprenant :

un émetteur-récepteur configuré pour effectuer la transmission ou la réception de signaux ; et un organe de commande configuré pour effectuer l'obtention d'un modèle de la variation d'un rapport de signal sur bruit, SNR, minimal nécessaire pour fournir une mesure de performance prédéterminée à un récepteur, en fonction d'un rapport de constellation $\alpha$, la sélection de N valeurs de SNR cibles, et l'obtention de chacune des N valeurs de $\alpha$, sur la base du modèle, par l'obtention de la valeur de $\alpha$ correspondant à chacune des valeurs de SNR cibles, dans lequel le rapport de constellation $\alpha$ est défini en tant que rapport de la séparation entre des points de constellation utilisés pour un premier flux et de la séparation entre des points de constellation utilisés pour un deuxième flux dans le signal HM, dans lequel l'émetteur est **caractérisé en ce que** l'organe de commande est en outre configuré pour effectuer :

l'obtention, pour chacune d'une pluralité de premières valeurs de $\alpha$, d'une première valeur de SNR minimale nécessaire pour fournir la mesure de performance prédéterminée au récepteur ; et la génération du modèle de la variation sur la base de la pluralité de premières valeurs de $\alpha$ et des premières valeurs de SNR minimales associées à chacune de la pluralité de premières valeurs de $\alpha$, et

dans lequel le modèle est une courbe de la forme :

$$S = [(A-C)/\alpha^B] + C$$

où $\alpha$ est le rapport de constellation, S est la valeur de SNR minimale correspondant à une valeur donnée de $\alpha$, A est la valeur de SNR minimale correspondant à $\alpha = 1$, B est une constante prédéterminée, et C est une valeur de SNR minimale correspondant à une valeur maximale prédéterminée de $\alpha$.

9. Emetteur selon la revendication 8, dans lequel les valeurs de SNR cibles sont des valeurs de SNR à des intervalles réguliers à l'intérieur d'une plage de SNR prédéterminée.

10. Emetteur selon la revendication 8, dans lequel les valeurs de SNR cibles sont des valeurs de SNR à l'intérieur d'une plage de SNR prédéterminée, la plage de SNR prédéterminée étant divisée en une ou plusieurs sous-plages, et une ou plusieurs des valeurs de SNR cibles étant des valeurs de SNR sélectionnées à des intervalles réguliers à l'intérieur d'au moins l'une de l'une ou plusieurs sous-plages, et

dans lequel chacune de l'une ou plusieurs sous-plages est une plage définie par deux valeurs consécutives de $\alpha$ parmi une pluralité prédéfinie de valeurs de $\alpha$.

11. Emetteur selon l'une quelconque des revendications 8 à 10, dans lequel l'organe de commande est en outre configuré pour effectuer:

l'obtention, pour chacune d'une pluralité de premières valeurs de $\alpha$, d'une première valeur de SNR minimale nécessaire pour fournir la mesure de performance prédéterminée au récepteur ; et

la génération du modèle de la variation des valeurs de SNR minimales avec $\alpha$, dans lequel la génération du modèle comprend:

l'obtention d'une première valeur de SNR correspondant à la plus grande valeur de $\alpha$ parmi la pluralité de premières valeurs de $\alpha$;

l'obtention d'une deuxième valeur de SNR correspondant à la plus petite valeur de $\alpha$ parmi la pluralité de premières valeurs de $\alpha$;

la sélection d'une pluralité de valeurs de SNR de modèle qui définissent des intervalles prédéterminés entre les première et deuxième valeurs de SNR ;

l'obtention d'une pluralité de deuxièmes valeurs de $\alpha$ par l'obtention des valeurs de $\alpha$ correspondant à chacune de la pluralité de valeurs de SNR de modèle ; et

la génération du modèle sur la base de la pluralité de deuxièmes valeurs de $\alpha$ et de la pluralité de valeurs de SNR de modèle,

dans la génération du modèle sur la base de la pluralité de deuxièmes valeurs de $\alpha$ et de la pluralité de valeurs de SNR de modèle comprend l'ajustement d'une courbe à la pluralité de deuxièmes valeurs de $\alpha$ et à la pluralité de valeurs de SNR de modèle.

12. Emetteur selon l'une quelconque des revendications précédentes, dans lequel les N valeurs obtenues de $\alpha$ sont destinées à être insérées parmi une pluralité de troisièmes valeurs prédéfinies de $\alpha$, et dans lequel l'une ou plusieurs valeurs de SNR cibles sont sélectionnées à l'intérieur d'une ou plusieurs plages de SNR définies par des troisièmes valeurs consécutives parmi les troisièmes valeurs de $\alpha$, et l'organe de commande est en outre configuré pour effectuer:

l'obtention, pour chaque paire de troisièmes valeurs consécutives de $\alpha$, d'une valeur d'écart de SNR G sur la base de :

$$G = (S_1 - S_2)$$

où $S_1$ est une valeur de SNR correspondant à l'une de ladite paire de troisièmes valeurs consécutives de $\alpha$ et $S_2$ est une valeur de SNR correspondant à l'autre de ladite paire de troisièmes valeurs consécutives de $\alpha$;

la détermination qu'une première des N valeurs de $\alpha$ doit être insérée entre la paire de troisièmes valeurs consécutives de $\alpha$ ayant la plus grande valeur de G ; et

la détermination d'où insérer celles restantes des N valeurs par :

l'obtention d'une valeur d'écart de SNR mise à jour $G_U$ pour chaque paire de troisièmes valeurs consécutives de $\alpha$ sur la base de :

$$G_U = (S_1 - S_2) / (n_\alpha + 1)$$

où $n_\alpha$ est le nombre de valeurs de $\alpha$ déjà insérées entre ladite paire de troisièmes valeurs consécutives de $\alpha$ ;

la détermination que la valeur suivante des N valeurs de $\alpha$ doit être insérée entre la paire de troisièmes valeurs consécutives de $\alpha$ ayant la plus grande valeur de $G_U$ ; et

la répétition jusqu'à ce que toutes les N valeurs de $\alpha$ aient été insérées.

13. Emetteur selon l'une quelconque des revendications précédentes, dans lequel l'organe de commande est en outre configuré pour effectuer :

l'obtention, pour chacune d'une pluralité de combinaisons de l'une des N valeurs de $\alpha$, de schémas de modulation disponibles et/ou de taux de codage, d'une estimation d'un rendement de fonctionnement ; et

la sélection de la valeur de $\alpha$, du schéma de modulation et/ou du taux de codage à partir de la combinaison avec le plus grand rendement estimé, pour leur utilisation lors de la transmission du signal HM,

dans lequel l'obtention du modèle de la variation du SNR minimal en fonction de $\alpha$ comprend l'obtention du modèle en fonction de $\alpha$, ou en fonction de $1/\alpha$, ou en fonction de $\beta$, où $\beta = \alpha/(\alpha+1)$ et dans lequel les N valeurs de $\alpha$ sont obtenues sur la base de :

$$\alpha_k = (k/N) \wedge (-1/B)$$

où k est un nombre entier de 1 à N, $\alpha_k$ est la k$^{\text{ième}}$ valeur de $\alpha$, et B est une constante prédéterminée.

[Fig. 1]

[Fig. 2]

[Fig. 3]

EP 2 936 756 B1

[Fig. 4]

EP 2 936 756 B1

[Fig. 5]

[Fig. 6]

EP 2 936 756 B1

[Fig. 7]

EP 2 936 756 B1

[Fig. 8]

[Fig. 9]

```
                        ┌──────────────┐
                        │    START     │
                        └──────────────┘
                               │
                               ▼
        ┌─────────────────────────────────────────────┐
        │        OBTAIN FIRST VALUES OF ALPHA          │───S901
        └─────────────────────────────────────────────┘
                               │
                               ▼
        ┌─────────────────────────────────────────────┐
        │  OBTAIN CUT-OFF SNR FOR EACH FIRST VALUE OF ALPHA │───S902
        └─────────────────────────────────────────────┘
                               │
                               ▼
        ┌─────────────────────────────────────────────┐
        │           OBTAIN MAXIMUM AND MINIMUM         │───S903
        │         SNR VALUES DEFINING SNR RANGE        │
        └─────────────────────────────────────────────┘
                               │
                               ▼
        ┌─────────────────────────────────────────────┐
        │          SELECT MODEL SNR VALUES DEFINING    │───S904
        │      PREDETERMINED INTERVALS IN SNR RANGE    │
        └─────────────────────────────────────────────┘
                               │
                               ▼
        ┌─────────────────────────────────────────────┐
        │         OBTAIN A MODEL VALUE OF ALPHA        │───S905
        │     CORRESPONDING TO EACH MODEL SNR VALUE    │
        └─────────────────────────────────────────────┘
                               │
                               ▼
        ┌─────────────────────────────────────────────┐
        │       GENERATE MODEL BASED ON MODEL VALUES OF│───S906
        │          ALPHA AND MODEL SNR VALUES          │
        └─────────────────────────────────────────────┘
                               │
                               ▼
                        ┌──────────────┐
                        │     END      │
                        └──────────────┘
```

[Fig. 10]

[Fig. 11]

[Fig. 12]

```
                    ┌─────────────┐
                    │    START    │
                    └──────┬──────┘
                           │
         ┌─────────────────▼─────────────────┐
         │   OBTAIN SNR GAP VALUES G FOR      │ ─── S1201
         │     PRE-EXISTING VALUES OF ALPHA   │
         └─────────────────┬─────────────────┘
                           │
                    ┌──────▼──────┐
                    │    n = 1    │ ─── S1202
                    └──────┬──────┘
                           │
         ┌─────────────────▼─────────────────┐
         │  DETERMINE THAT nth NEW VALUE IS TO BE │ ─── S1203
         │    INSERTED IN RANGE WITH LARGEST G │
         └─────────────────┬─────────────────┘
                           │    S1204
                    Yes ◄──◇ n = N?
                           │
                          NO
                           │
         ┌─────────────────▼─────────────────┐
         │   OBTAIN UPDATED SNR GAP VALUES Gu │ ─── S1205
         └─────────────────┬─────────────────┘
                           │
                    ┌──────▼──────┐
                    │  n = n + 1  │ ─── S1206
                    └──────┬──────┘
                           │
         ┌─────────────────▼─────────────────┐
         │   DETERMINE THAT nth NEW VALUE IS TO │ ─── S1207
         │  BE INSERTED IN RANGE WITH LARGEST Gu │
         └─────────────────┬─────────────────┘
                           │    S1208
                    NO ◄───◇ n = N?
                           │
                          Yes
                           │
                    ┌──────▼──────┐
                    │     END     │
                    └─────────────┘
```

[Fig. 13]

```
                    ┌─────────────┐
                    │    START    │
                    └──────┬──────┘
                           │
         ┌─────────────────▼─────────────────┐
         │   OBTAIN ESTIMATE OF THROUGHPUT    │ ─── S1301
         │       FOR EACH COMBINATION         │
         └─────────────────┬─────────────────┘
                           │
         ┌─────────────────▼─────────────────┐
         │  SELECT PARAMETERS FROM COMBINATION │ ─── S1302
         │      WITH HIGHEST THROUGHPUT        │
         └─────────────────┬─────────────────┘
                           │
                    ┌──────▼──────┐
                    │     END     │
                    └─────────────┘
```

[Fig. 14]

[Fig. 15]

[Fig. 16]

[Fig. 17]

START

OBTAIN N VALUES OF ALPHA BASED ON $\alpha_K = (k/N)^{-1/B}$ — S1701

SELECT ONE OF THE OBTAINED N VALUES OF ALPHA — S1702

TRANSMIT AN HM SIGNAL USING THE SELECTED VALUE OF ALPHA — S1703

TRANSMIT VALUES OF N, B AND k FOR SELECTED VALUE OF ALPHA — S1704

END

[Fig. 18]

START

OBTAIN VALUES OF N, B AND k AS INFORMATION FOR IDENTIFYING ALPHA — S1801

IDENTIFY VALUE OF ALPHA BASED ON $\alpha = (k/N)^{-1/B}$ — S1802

DECODE RECEIVED HM SIGNAL BASED THE SELECTED VALUE OF ALPHA — S1803

END

## REFERENCES CITED IN THE DESCRIPTION

**Non-patent literature cited in the description**

- **JUSTIN JAMES.** Adaptive MultireSolution Modulation for Multimedia Traffic over Nakagami Fading Channels. *INTERNATIONAL JOURNAL OF WIRELESS & MOBILE NETWORKS,* 30 April 2012, vol. 4 (2